# EUROPÄISCHE PATENTSCHRIFT

(11) **EP 2 638 308 B1**
(45) Veröffentlichungstag und Bekanntmachung des Hinweises auf die Patenterteilung: **27.08.2014**
(21) Anmeldenummer: 11778621.0
(22) Anmeldetag: 04.11.2011
(51) Int. Cl.: F16H 3/66, F16H 3/62

(54) **MEHRGANGGETRIEBE**
MULTI-GEAR GEARBOX
TRANSMISSION À PLUSIEURS RAPPORTS

(30) Priorität: 10.11.2010 DE 102010043670
(43) Veröffentlichungstag der Anmeldung: 18.09.2013
(73) Patentinhaber: Ford Global Technologies, LLC, Dearborn, MI 48126 (US)
(72) Erfinder: KIRCHHOFFER, Johann, 50737 Köln (DE)
(74) Vertreter: Dörfler, Thomas
(86) Internationale Anmeldenummer: PCT/EP2011/069379
(87) Internationale Veröffentlichungsnummer: WO 2012/062654

(56) Entgegenhaltungen:
- EP-A1- 2 141 386
- DE-A1- 3 447 937
- US-A- 4 143 563
- US-A- 4 258 586
- US-A- 5 016 175
- US-A1- 2009 048 059

## Beschreibung

Die vorliegende Erfindung betrifft ein Mehrganggetriebe.

Im Zuge der fortschreitenden Entwicklung kleinerer Motoren mit geringerem Kraftstoffverbrauch besteht ein fortwährender Bedarf nach Getrieben mit immer größerer Spanne von Übersetzungsverhältnissen und größerer Anzahl von Gängen sowie auch einer möglichst gleichmäßigen Verteilung der Übersetzungsverhältnisse.

Aus US 7,749,126, US 7,731, 625 sowie US 7,736,263 sind Mehrganggetriebe bekannt, welche jeweils einen Simpson-Planetenradsatz einsetzen, um insgesamt ein 8- bzw. 9-Ganggetriebe zu realisieren. Ein solcher Simpson-Planetenradsatz weist in bekannter Weise ein gemeinsames Sonnenrad für zwei Hohlräder sowie zwei Planetenträgeranordnungen auf.

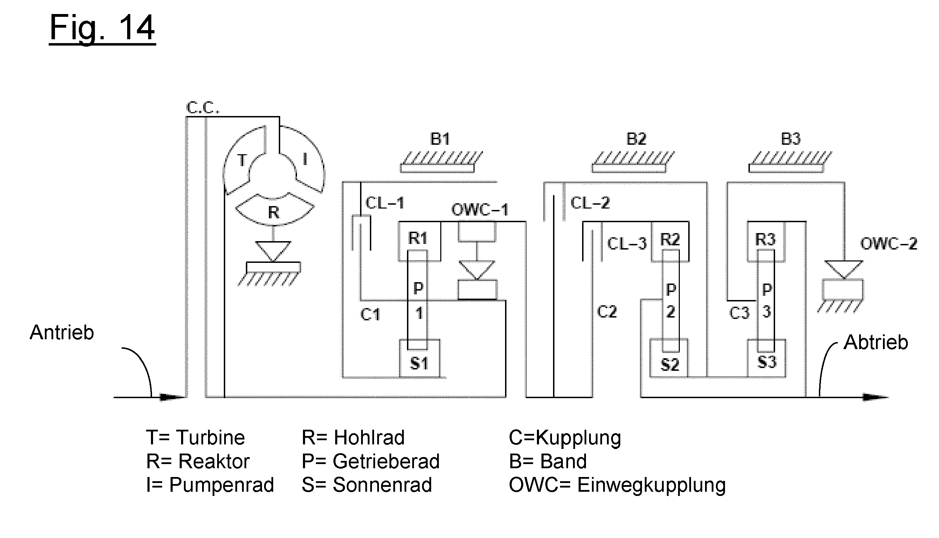

In Fig. 14 ist ein gattungsgemäßes Mehrgang-Getriebe nach dem Oberbegriff des Anspruchs 1 dargestellt, welches auch als 5R55E-Getriebe bezeichnet wird. Ein solches Mehrgang-Getriebe umfasst ein Antriebselement, ein Abtriebselement, einen Simpson-Planetenradsatz, welcher ein gemeinsames Sonnenrad, zwei Hohlräder und zwei Planetenträgeranordnungen aufweist, und ein Overdrive-Planetengetriebe, welches ein Sonnenrad, eine Planetenträgeranordnung und ein Hohlrad aufweist und mit dem Simpson-Planetenradsatz in Reihe geschaltet ist.

Ein weiteres Mehrgang-Getriebe nach dem Oberbegriff von Anspruch 1 ist aus US 4,143,563 bekannt.
Es ist Aufgabe der vorliegenden Erfindung, ein Mehrganggetriebe bereitzustellen, welches ein hohes Maß an Flexibilität hinsichtlich der einstellbaren Gänge bzw. Übersetzungsverhältnisse und hinsichtlich einer Variation der Spreizung ermöglicht.

Diese Aufgabe wird gemäß den Merkmalen des unabhängigen Patentanspruches 1 gelöst.

Das Mehrgang-Getriebe ist dadurch gekennzeichnet, dass es ferner ein Underdrive-Planetengetriebe aufweist, welches ein Sonnenrad, eine Planetenträgeranordnung und ein Hohlrad aufweist und mit dem Simpson-Planetenradsatz und dem Overdrive-Planetengetriebe in Reihe geschaltet ist.

Der Erfindung liegt insbesondere das Konzept zugrunde, einen Simpson-Planetenradsatz, ein Overdrive-Planetengetriebe und ein Underdrive-Planetengetriebe in solcher Weise miteinander in Reihe zu verschalten, dass durch das Underdrive-Planetengetriebe dem Simpson-Planetenradsatz eine größere Spanne an Übersetzungsverhältnissen hinzugefügt wird. Dabei werden in dem erfindungsgemäßen Mehrganggetriebe durch das Overdrive-Planetengetriebe zwei Vorteile erzielt: Zum einen kann das Mehrganggetriebe - je nach der letztlich erfolgten Gangwahl - im Schongang betrieben werden.

Zum anderen kann auch das Übersetzungsverhältnis des Overdrive-Planetengetriebes zwischen den Übersetzungsverhältnissen des Underdrive-Planetengetriebes und den Übersetzungsverhältnissen des Simpson-Planetenradsatzes geschaltet werden, wodurch große Schritte bzw. Sprünge in Gesamt - Übersetzungsverhältnissen vermieden werden. Insgesamt wird aufgrund der erfindungsgemäßen Kombination aus einem Underdrive-Planetengetriebe mit einem Overdrive-Planetengetriebe ein Mehrganggetriebe bereitgestellt, welches ein hohes Maß an Flexibilität hinsichtlich der einstellbaren Gänge bzw. Übersetzungsverhältnisse mit gleichzeitig hoher oder geringerer Getriebespreizung erzielt.

Herkömmliche Automatikgetriebe nach dem Stand der Technik, welche mit Planetengetrieben ausgerüstet sind, erlauben in der Regel geometrische Getriebesprünge. Dies bedeutet, dass die Gangspreizung im 1. Gang sehr hoch ist und mit höheren Gängen geometrisch abnimmt. Dies hat den Nachteil, dass erhebliche Beschleunigungslöcher entstehen, die die Dynamik und den Kraftstoffverbrauch des Fahrzeugs verschlechtern. Das Motor-Getriebe-System nutzt hierbei die Leistungskennlinie des Motors nicht voll aus. Aufgrund der Möglichkeit eines Zu- und Abschaltens des Overdriveplanetengetriebes können diese Gangsprünge reduziert werden, um gleichmäßige Gangsprünge bzw. gleichmäßige Beschleunigungen zu erzielen.

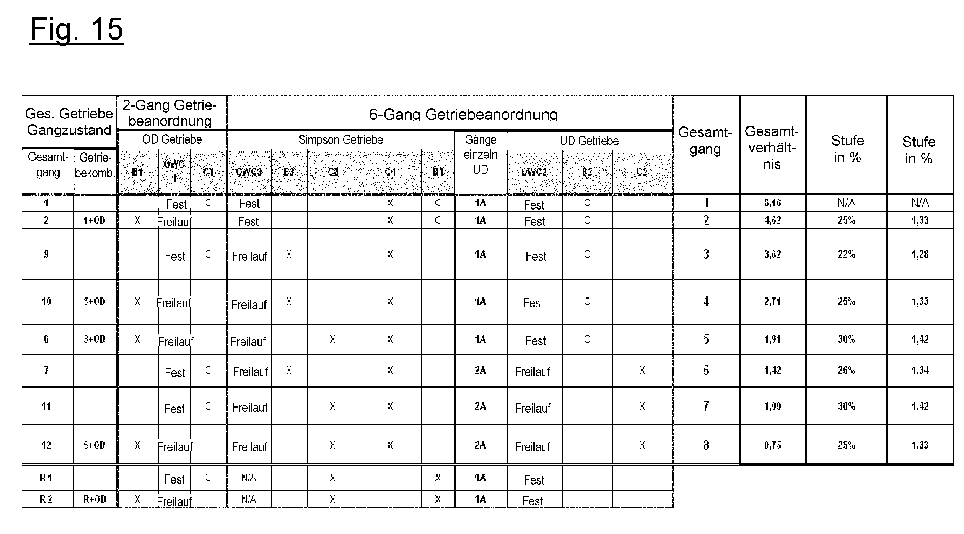

Fig. 15 zeigt ein mögliches 8-Ganggetriebe mit den entsprechenden Gangstufen und Gangsprünge. Das Overdrive-Planetengetriebe wird hier in diesem Fall viermal zu- und abgeschaltet, um die vorstehend genannten weiten Gangsprünge zu reduzieren. Der 8. Gang ist dann der reine Overdrive-Gang und als Schongang ausgelegt.

Gemäß einer Ausführungsform ist im Underdrive-Planetengetriebe wahlweise das Sonnenrad oder das Hohlrad festhaltbar. Dies hat den Vorteil, dass hohe oder mittlere Getriebespreizungen bewerkstelligt werden können.

Auf diese Weise können insgesamt 12 unterschiedliche Getriebeübersetzungen realisiert werden. Durch das Underdrive-Planetengetriebe mit wahlweise weiter oder mittlerer Spreizung bzw. Übersetzungsverhältnis (je nachdem, ob das Sonnenrad oder dass Hohlrad festgehalten ist) ist es möglich, die Getriebe-Gesamtspreizung als Multiplikator entsprechend zu vergrößern oder zu verringern, um somit mit dem Simpson- und der Overdrive-Planetenradsatz unterschiedliche Übersetzungsverhältnisse bereitstellen zu können. In dem erfindungsgemäßen Mehrganggetriebe bildet die Kombination aus Underdrive-Planetengetriebe und Simpson-Planetenradsatz eine 6-Gang-Getriebeanordnung, wobei durch die zusätzliche Reihenverschaltung mit dem Overdrive-Planetengetriebe ein Mehrganggetriebe mit (theoretisch) 12 Vorwärts Gängen und 2 Rückwärtsgängen realisiert wird.

Von diesen theoretisch einstellbaren 12 Gängen ermöglicht das erfindungsgemäße Mehrganggetriebe eine Einstellung von bis zu 10 realen Gängen und die Bereitstellung einer Gesamt-Getriebespreizung zwischen einem Wert vom 6.0 und einem Wert von 10.0.

Es ist sogar möglich, das erfindungsgemäße Mehrganggetriebe über eine entsprechende Getriebeansteuerung als 6-Gang-Ausführung oder wahlweise als 8-/9- oder 10- Gang-Ausführung zu betreiben, ohne hierfür das Mehrganggetriebe physikalisch zu ändern bzw. Hardware-Änderungen vorzunehmen. Dies hat den Vorteil, dass die Schalthäufigkeit entsprechend reduziert werden kann, was erforderlichenfalls mit einer gegebenen Motorvariante oder mit einer diskreten Diesel-Variante erfolgen kann.

Das erfindungsgemäße Mehrganggetriebe ist wahlweise als 6-Gang-Getriebe, 7-Gang-Getriebe, 8-Gang-Getriebe, 9-Gang-Getriebe oder 10-Gang-Getriebe in einem einzigen Getriebe über die Getriebesteuerung betreibbar. Hierdurch kann einerseits eine optimale Anfahrcharakteristik erzielt und gleichzeitig in Abhängigkeit der Fahrsituation die Schalthäufigkeit minimiert werden.

Die Erfindung umfasst ferner die Implementierung des vorstehend beschriebenen Mehrganggetriebes sowohl innerhalb einer 'Nord-Süd'-Anordnung als auch in einer 'Ost-West'-Anordnung für Fahrzeuge mit Frontantrieb. Die 'Nord-Süd'-Anordnung zeichnet sich dadurch aus, dass Underdrive-, Overdrive- und Simpson-Planetengetriebe immer auf einer Getriebeachse angeordnet sind. Die 'Ost-West' Anordnung bzw. Ausführung beinhaltet mindestens zwei Getriebeachsen, welche parallel angeordnet sind und bei denen wahlweise das Overdrive-, das Underdrive- oder das Simpson-Planetengetriebe entweder auf der oberen Getriebeachse in Reihe mit dem Anfahrsystem oder auf einer der unteren Getriebeachsen in Verbindung mit dem Differential angeordnet sind. Die Verbindung der einzelnen Achsen kann über ein Transfergetriebe entweder in Form von einem Gangradsatz oder einer Kettenverbindung bewerkstelligt werden.

Weitere Ausgestaltungen der Erfindung sind der Beschreibung sowie den Unteransprüchen zu entnehmen.

Die Erfindung wird nachstehend anhand bevorzugter Ausführungsformen unter Bezugnahme auf die beigefügte Abbildung erläutert. Dabei beziehen sich Fig. 1-15 jeweils auf eine Nord-Süd-Anordnung, und Fig. 16-19 beziehen sich auf eine Ost-West-Anordnung.

Es zeigen:
- Figur 1a-c: schematisch Darstellungen des Aufbaus eines erfindungsgemäßen Mehrganggetriebes in einer ersten Ausführungsform, wobei ein Over-drive-Planetengetriebe in Reihe mit einem Underdrive-Planetenge-triebe und in Reihe mit einem Simpson-Planetenradsatz geschaltet ist, und zwar in Ausgestaltungen mit festgehaltenem Sonnenrad (Figur 1 c) oder mit festgehaltenem Hohlrad (Figur 1 b);
- Figur 2a-c: eine schematische Darstellung des Aufbaus eines erfindungsgemäßen Mehrganggetriebes in einer zweiten Ausführungsform, wobei ein Simpson-Planetenradsatz in Reihe mit einem Underdrive-Planetengetriebe und in Reihe mit einem Overdrive-Planetengetriebe geschaltet ist, und zwar in Ausgestaltungen mit festgehaltenem Sonnenrad (Figur 2c) oder mit festgehaltenem Hohlrad (Figur 2b);
- Figur 3a-c: eine schematische Darstellung des Aufbaus eines erfindungsgemäßen Mehrganggetriebes in einer dritten Ausführungsform, wobei ein Underdrive-Planetengetriebe (mit gehaltenem Sonnenrad, optional mit gehaltenem Hohlrad) in Reihe mit einem Simpson-Planetenradsatz und in Reihe mit einem Overdrive-Planetengetriebe geschaltet ist, und zwar in Ausgestaltungen mit festgehaltenem Sonnenrad (Figur 3b) oder mit festgehaltenem Hohlrad (Figur 3c);
- Figur 4a-c: eine schematische Darstellung des Aufbaus eines erfindungsgemäßen Mehrganggetriebes in einer vierten Ausführungsform, wobei ein Underdrive-Planetengetriebe in Reihe mit einem Overdrive-Planetengetriebe und in Reihe mit einem Simpson-Planetenradsatz geschaltet ist, und zwar in Ausgestaltungen mit festgehaltenem Sonnenrad (Figur 4c) oder mit festgehaltenem Hohlrad (Figur 4b);
- Figur 5a-c: eine schematische Darstellung des Aufbaus eines erfindungsgemäßen Mehrganggetriebes in einer fünften Ausführungsform, wobei ein Overdrive-Planetengetriebe in Reihe mit einem Simpson-Planetenradsatz und in Reihe mit einem Underdrive-Planetengetriebe geschaltet ist, und zwar in Ausgestaltungen mit festgehaltenem Sonnenrad (Figur 5b) oder mit festgehaltenem Hohlrad (Figur 5c);
- Figur 6a-c: eine schematische Darstellung des Aufbaus eines erfindungsgemäßen Mehrganggetriebes in einer sechsten Ausführungsform, wobei ein Simpson-Planetenradsatz in Reihe mit einem Overdrive-Planetengetriebe und in Reihe mit einem Underdrive-Planetengetriebe geschaltet ist, und zwar in Ausgestaltungen mit festgehaltenem Sonnenrad (Figur 6b) oder mit festgehaltenem Hohlrad (Figur 6c);
- Figur 7: eine schematische Darstellung des Aufbaus eines erfindungsgemäßen Mehrganggetriebes in einer weiteren Ausführungsform als Beispiel für eine mögliche Ausführung ohne Einwegkupplungen;
- Figur 8a-b: Wahrheitstabellen für das Mehrganggetriebe mit (Figur 8a) bzw. ohne Einwegkupplungen (Wahrheitstabelle - Figur 8b, Getriebediagram-Figur 7), aus denen ersichtlich ist, welche der Drehmomentübertragungseinrichtungen (Bremsbänder, Kupplungen bzw. Einwegkupplungen) für einen jeweils einzulegenden Gang der insgesamt 12 theoretisch einstellbaren Gänge ein- bzw. ausgerückt sind; diese Wahrheitstabellen sind auf die Ausgestaltungen von Fig. 1a-c und Fig. 4a-c anwendbar;
- Figur 9: eine Wahrheitstabelle, welche auf ein Mehrganggetriebe gemäß den Ausgestaltungen von Figur 5a-c anwendbar ist;
- Figur 10: eine Wahrheitstabelle, welche auf ein Mehrganggetriebe gemäß den Ausgestaltungen von Figur 3a-c anwendbar ist;
- Figur 11: eine Wahrheitstabelle, welche auf ein Mehrganggetriebe gemäß den Ausgestaltungen von Figur 2a-c and Figur 6a-c anwendbar ist;
- Figur 12: Anfahrsysteme mit einem Einmassen- und einem ZweimassenSchwungrad System;
- Figur 13: Anfahrsysteme mit einem Tri-Lock-Wandler und einer Föttinger-Kupplung;
- Figur 14: schematische Darstellungen von herkömmlichen Overdrive-Planetengetrieben in Reihe mit einem Simpson-Planetenradsatz -5R55E;
- Figur 15: eine Wahrheitstabelle für ein 8-Gang-Mehrganggetriebe, welches als Beispiel mit Gangstufen und Gangspreizungen ausgeführt ist; und
- Figur 16-19: schematische Darstellungen weiterer Ausführungsformen eines erfindungsgemäßen Mehrganggetriebes mit mindestens zwei Getriebeachsen.

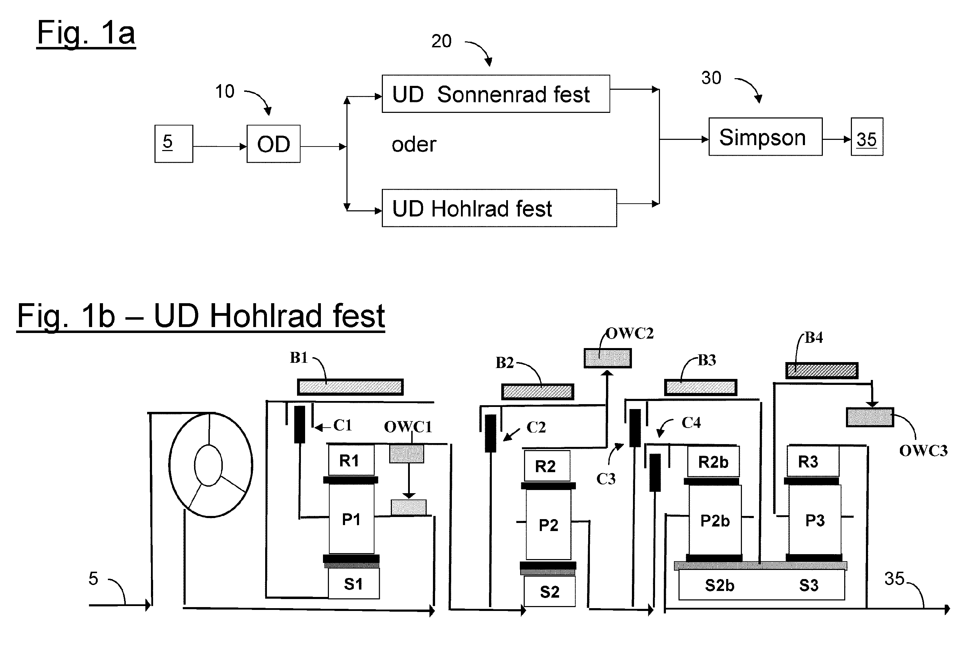

Fig. 1a-c zeigt ein erfindungsgemäßes Mehrganggetriebe. Das Mehrganggetriebe weist eingangsseitig ein im Antriebsstrang mit dem Motor verbundenes Antriebselement 5 sowie ausgangsseitig ein im Antriebsstrang mit dem Achsantrieb verbundenes Abtriebselement 35 auf.

Des Weiteren weist das Mehrganggetriebe gemäß Fig. 1a-c einen Simpson-Planetenradsatz 30 auf, welcher ein gemeinsames Sonnenrad S2b, S3, zwei Hohlräder R2b, R3 und zwei Planetenträgeranordnungen P2b, P3 aufweist.

Das Mehrganggetriebe umfasst ferner ein Overdrive-Planetengetriebe 10, welches ein Sonnenrad S1, eine Planetenträgeranordnung P1 und ein Hohlrad R1 auf. Das Overdrive-Planetengetriebe 10 ist mit dem Simpson-Planetenradsatz 30 in Reihe geschaltet und auf dem Getriebepfad von dem Antriebselement 5 zum Abtriebselement 35 vor dem Simpson-Planetenradsatz 30 angeordnet.

Das Mehrganggetriebe umfasst ferner ein Underdrive-Planetengetriebe 20, welches ein Sonnenrad S2, eine Planetenträgeranordnung P2 und ein Hohlrad R2 aufweist und mit dem Simpson-Planetenradsatz 30 und dem Overdrive-Planetengetriebe 10 in Reihe geschaltet ist.

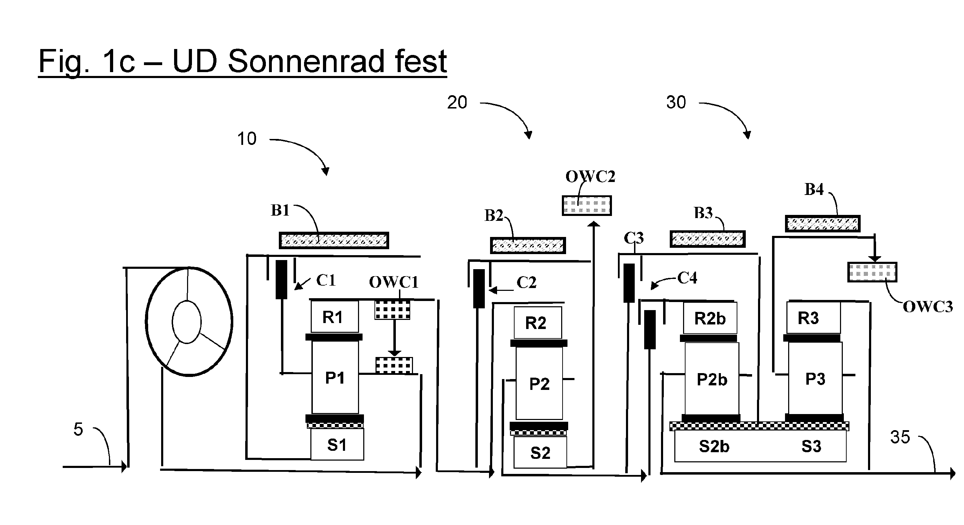

Des Weiteren weist das Mehrganggetriebe gemäß Fig. 1 Drehmomentübertragungseinrichtungen auf, welche im dargestellten Ausführungsbeispiel vier Bremsbänder B1-B4 sowie vier Kupplungen C1-C4 und drei Einwegkupplungen OWC1-OWC3 umfassen. Von diesen sind die Drehmomentübertragungseinrichtungen C1, OWC1 und B1 dem Overdrive-Planetengetriebe 10, die Drehmomentübertragungseinrichtungen C2, B2 und OWC2 dem Underdrive-Planetengetriebe 20 und die Drehmomentübertragungseinrichtungen C3, C4, B3, B4 und OWC3 dem Simpson-Planetenradsatz 30 zugeordnet.

Konkret ist gemäß Fig. 1b die Planetenträgeranordnung P1 mit dem Antriebselement 5 fest verbunden und über eine erste Kupplung C1 mit dem Sonnenrad S1 selektiv koppelbar. Das Hohlrad R1 ist mit dem Sonnenrad S2 fest verbunden und über eine zweite Kupplung C2 mit dem Hohlrad R2 selektiv koppelbar. Die Planetenträgeranordnung P2 ist über eine dritte Kupplung C3 mit dem gemeinsamen Sonnenrad S2b, S3 selektiv koppelbar und über eine vierte Kupplung C4 mit dem Hohlrad R2b selektiv koppelbar. Die Planetenträgeranordnung P2b ist mit dem Abtriebselement 35 und mit dem Hohlrad R3 fest verbunden. Das Sonnenrad S1, das Hohlrad R2, das gemeinsame Sonnenrad S2b, S3 und die Planetenträgeranordnung P3 sind über ein erstes, zweites, drittes bzw. viertes Bremsband B1, B2, B3, B4 bremsbar. Das Hohlrad R1 ist über eine erste Einwegkupplung OWC1 an die Planetenträgeranordnung P1 gekuppelt. Das Hohlrad R2 oder das Sonnenrad S2 ist an eine zweite Einwegkupplung OWC2 gekuppelt. Die Planetenträgeranordnung P3 ist an eine dritte Einwegkupplung OWC3 gekuppelt.

In dem Underdrive-Planetengetriebe 20 ist wahlweise das Sonnenrad S2 oder das Hohlrad R2 festhaltbar.

Fig. 1b zeigt die Konfiguration mit festgehaltenem Hohlrad R2. Diese Konfiguration ermöglicht Übersetzungsverhältnisse des Underdrive-Planetengetriebes 20 von weniger als 2, sowie Übersetzungsverhältnisse und Gesamtspreizung des gesamten Mehrganggetriebes bis zu 8.5.

Fig. 1c zeigt die analoge Konfiguration mit festgehaltenem Sonnenrad S2. Diese Konfiguration ermöglicht Übersetzungsverhältnisse des Underdrive-Planetengetriebes 20 von mehr als 2, sowie Übersetzungsverhältnisse und Gesamtspreizung des gesamten Mehrganggetriebes von bis zu 10.0.

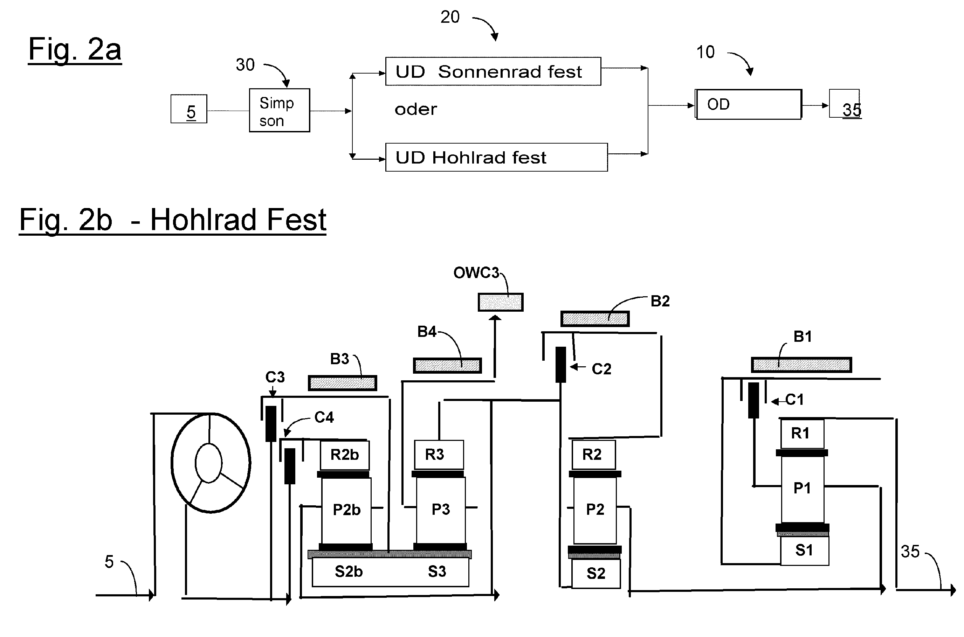

Fig. 2a-c bis 6a-c zeigen unterschiedliche Konfigurationen des erfindungsgemäßen Mehrganggetriebes, welche sich hinsichtlich der Reihenfolge von Simpson-Planetenradsatz 30, Overdrive-Planetengetriebe 10 und Underdrive-Planetengetriebe 20 voneinander unterscheiden.

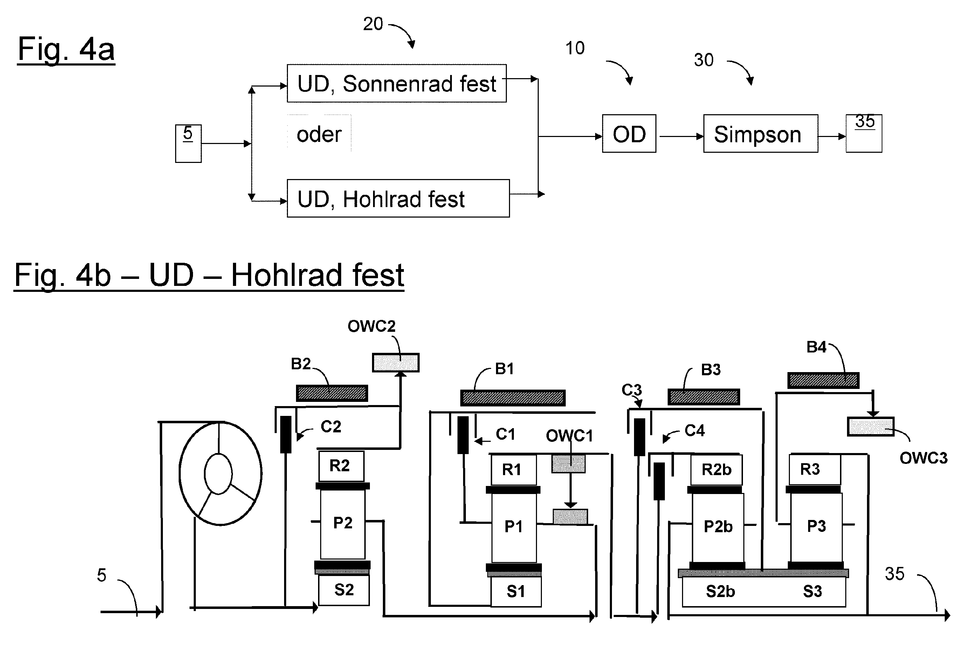

Den Ausführungsformen von Fig. 1a-c und Fig. 4a-c ist gemeinsam, dass das Overdrive-Planetengetriebe 10 und das Underdrive-Planetengetriebe 20 bezogen auf den von dem Antriebselement 5 zum Abtriebselement 35 verlaufenden Getriebepfad vor dem Simpson-Planetenradsatz 30 angeordnet sind.

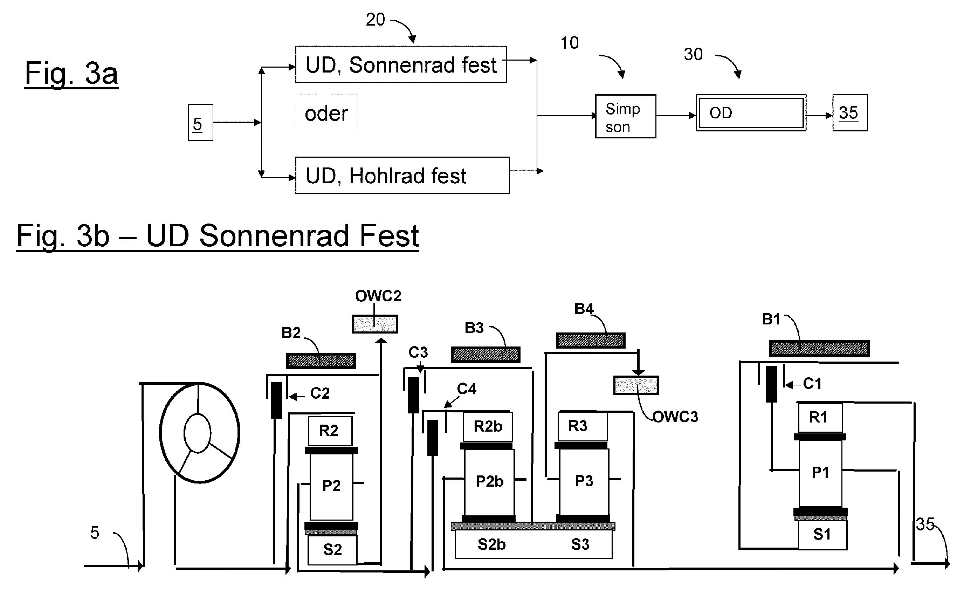

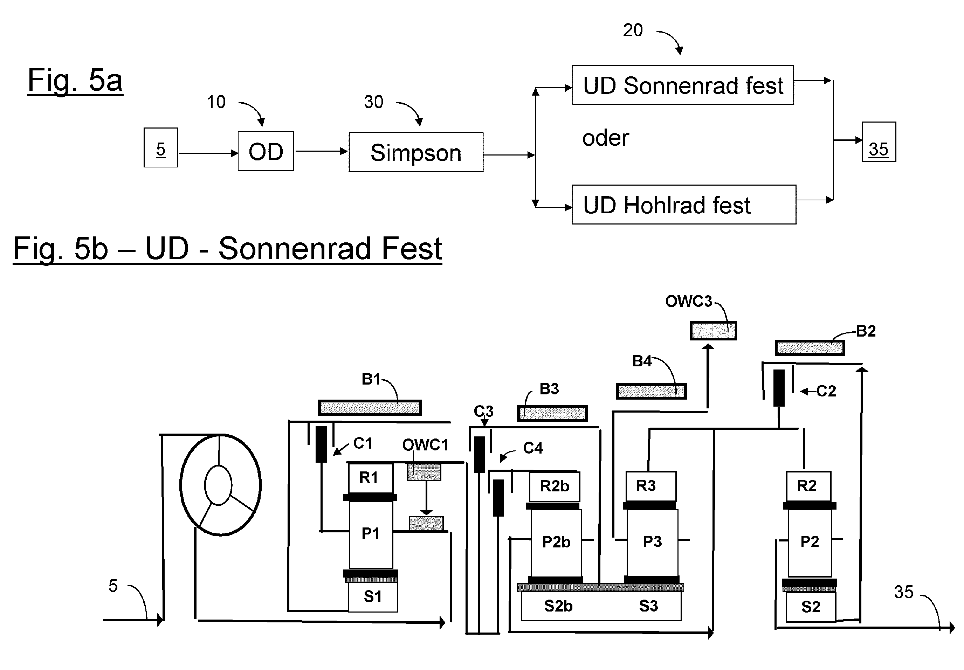

Den Ausführungsformen aus Fig. 3a-c und 5a-c ist gemeinsam, dass der Simpson-Planetenradsatz 30 zwischen dem Overdrive-Planetengetriebe 10 und dem Underdrive-Planetengetriebe 20 bezogen auf den von dem Antriebselement 5 zum Abtriebselement 35 verlaufenden Getriebepfad angeordnet ist. Dabei ist bei den Ausführungsformen von Fig. 3a-c jeweils der Simpson-Planetenradsatz 30 bezogen auf den von dem Antriebselement 5 zum Abtriebselement 35 verlaufenden Getriebepfad auch nach dem Underdrive-Planetengetriebe 20 angeordnet, wobei gemäß Fig. 3a-c das Overdrive-Planetengetriebe 10 im Getriebepfad nach dem Underdrive-Planetengetriebe 20 und gemäß Fig. 5a-c das Overdrive-Planetengetriebe 10 vor dem Underdrive-Planetengetriebe 20 angeordnet ist.

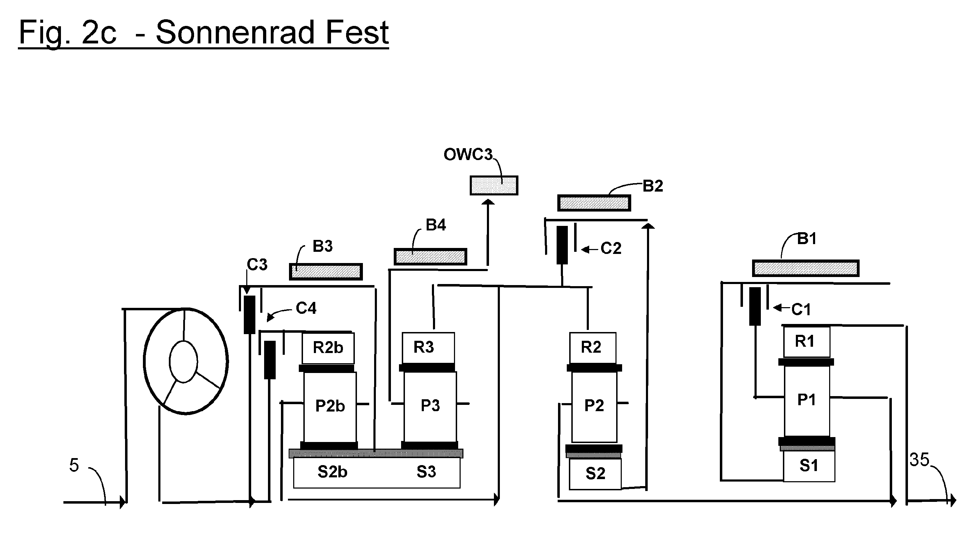

Im Weiteren wird die Konfiguration gemäß Fig. 2b,c genauer beschrieben. Gemäß Fig. 2b,c ist das Hohlrad R1 mit dem Abtriebselement 35 fest verbunden. Die Planetenträgeranordnung P1 ist über eine erste Kupplung C1 mit dem Sonnenrad S1 selektiv koppelbar und mit der Planetenträgeranordnung P2 fest verbunden. Das Sonnenrad S2 ist mit dem Hohlrad R3 und der Planetenträgeranordnung P2b fest verbunden und über eine zweite Kupplung C2 mit dem Hohlrad R2 selektiv koppelbar. Die Planetenanordnung P2 ist fest mit der Planentenanordnung P1 verbunden. Das Antriebselement 5 ist mit dem gemeinsamen Sonnenrad S2b, S3 über eine dritte Kupplung C3 und mit dem Hohlrad R2b über eine vierte Kupplung C4 selektiv koppelbar. Das Sonnenrad S1, das Hohlrad R2 oder das Sonnenrad S2, das gemeinsame Sonnenrad S2b, S3 und die Planetenträgeranordnung P3 sind über ein erstes, zweites, drittes bzw. viertes Bremsband (oder wahlweise über Kupplungssysteme) B1, B2, B3, B4 bremsbar. Die Planetenträgeranordnung P3 ist an eine Einwegkupplung OWC3 gekuppelt.

Das Sonnenrad S2 ist in einer anderen Ausführung (Figur 2c) über eine Kupplung C2 dem Hohlrad R3 und der Planetenträgeranordnung P2b koppelbar.

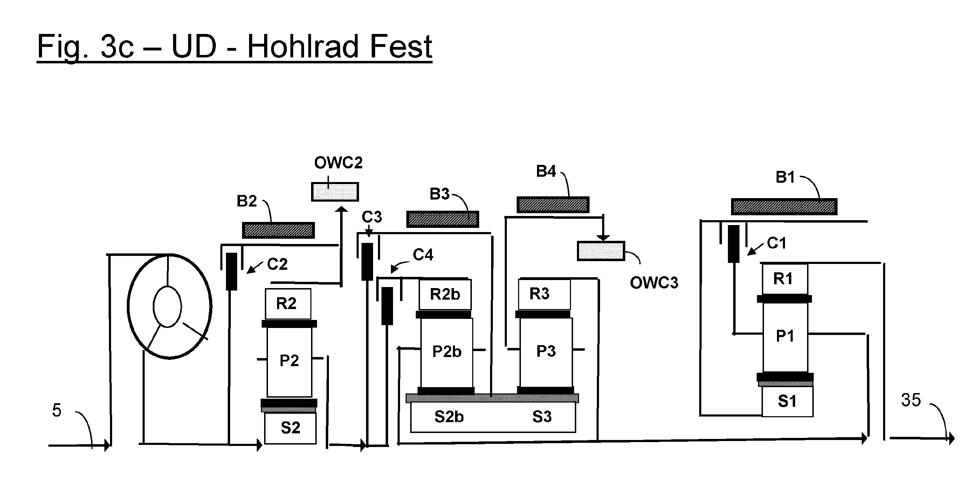

Im Weiteren wird die Konfiguration gemäß Fig. 3b,c genauer beschrieben. Gemäß Fig. 3b,c ist das Hohlrad R1 mit dem Abtriebselement 35 fest verbunden. Die Planetenträgeranordnung P1 ist über eine erste Kupplung C1 mit dem Sonnenrad S1 selektiv koppelbar und mit der Planetenträgeranordnung P2b und dem Hohlrad R3 fest verbunden. Das Hohlrad R2 ist mit dem Antriebselement 5 fest verbunden und über eine zweite Kupplung C2 mit dem Sonnenrad S2 selektiv koppelbar. Das gemeinsame Sonnenrad S2b, S3 ist über eine dritte Kupplung C3 mit der Planetenträgeranordnung P2 selektiv koppelbar. Das Hohlrad R2b ist über eine vierte Kupplung C4 mit der Planetenträgeranordnung P2 selektiv koppelbar. Das Sonnenrad S1, das Hohlrad R2 oder das Sonnenrad S2, das gemeinsame Sonnenrad S2b, S3 und die Planetenträgeranordnung P3 sind über ein erstes, zweites, drittes bzw. viertes Bremsband (oder wahlweise über Kupplungssysteme) B1, B2, B3, B4 bremsbar. Das Hohlrad R2 oder das Sonnenrad S2 ist an eine Einwegkupplung OWC2 gekuppelt, und die Planetenträgeranordnung P3 ist an eine Einwegkupplung OWC3 gekuppelt ist.
Das Sonnenrad S2 ist in einer anderen Ausführung (Figur 3c) mit dem Antriebselement 5 fest verbunden und über eine zweite Kupplung C2 mit dem Hohlrad R2 selektiv koppelbar.

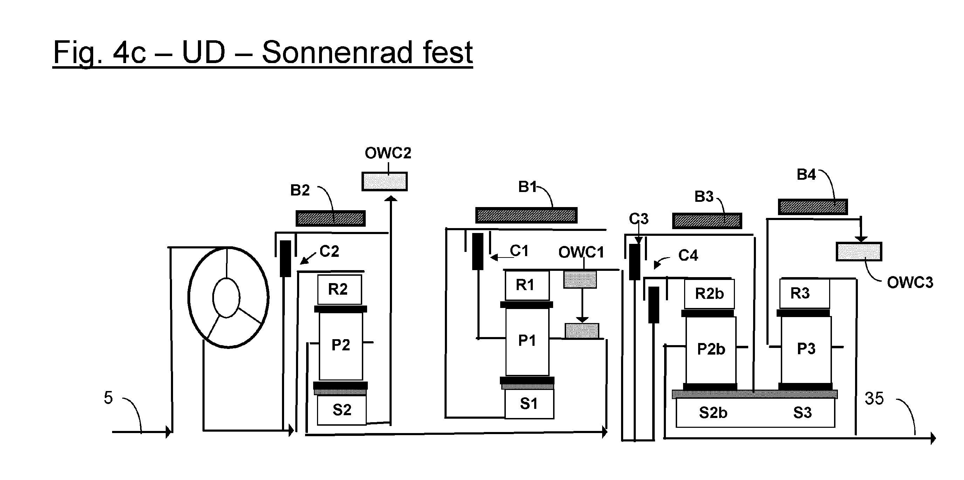

Im Weiteren wird die Konfiguration gemäß Fig. 4b,c genauer beschrieben. Gemäß Fig. 4b,c ist die Planetenträgeranordnung P1 über eine erste Kupplung C1 mit dem Sonnenrad S1 selektiv koppelbar und mit der Planetenträgeranordnung P2 fest verbunden. Das Sonnenrad S2 ist mit dem Antriebselement 5 fest verbunden und über eine zweite Kupplung C2 mit dem Hohlrad R2 selektiv koppelbar. Das Hohlrad R1 ist über eine dritte Kupplung C3 mit dem gemeinsamen Sonnenrad S2b, S3 und über eine vierte Kupplung C4 mit dem Hohlrad R2b selektiv koppelbar. Die Planetenträgeranordnung P2b ist mit dem Hohlrad R3 und mit dem Abtriebselement 35 fest verbunden. Das Sonnenrad S1, das Hohlrad R2 oder das Sonnenrad S2, das gemeinsame Sonnenrad S2b, S3 und die Planetenträgeranordnung P3 sind über ein erstes, zweites, drittes bzw. viertes Bremsband (oder wahlweise über Kupplungssysteme) B1, B2, B3, B4 bremsbar. Das Hohlrad R1 ist über eine Einwegkupplung OWC1 an die Planetenträgeranordnung P1 gekuppelt. Das Hohlrad R2 oder das Sonnenrad S2 ist an eine zweite Einwegkupplung OWC2 gekuppelt. Die Planetenträgeranordnung P3 ist an eine dritte Einwegkupplung OWC3 gekuppelt.

Das Hohlrad R2 ist in einer weiteren Ausführung (Fig 4c) mit dem Antriebselement 5 fest verbunden und über eine zweite Kupplung C2 mit dem Sonnenrad S2 selektiv koppelbar.

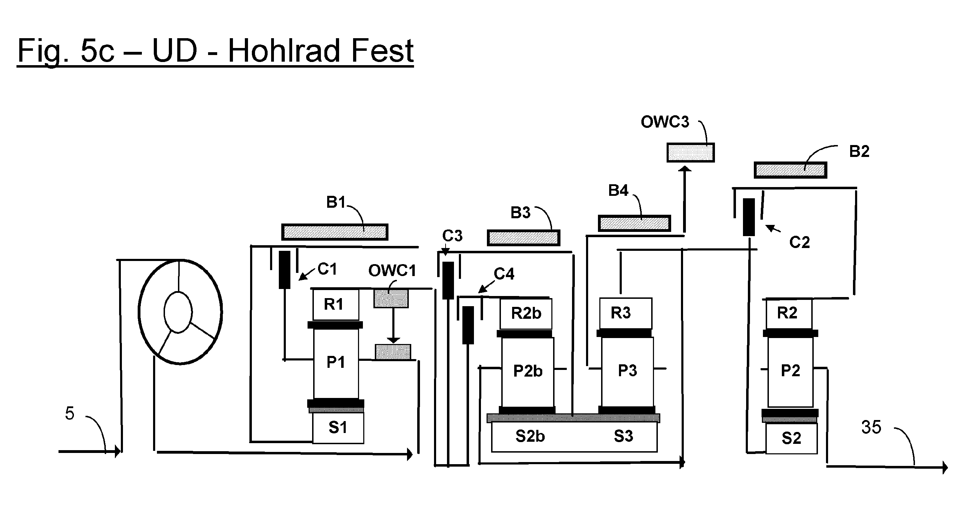

Im Weiteren wird die Konfiguration gemäß Fig. 5b,c genauer beschrieben. Gemäß Fig. 5b,c ist die Planetenträgeranordnung P1 über eine erste Kupplung C1 mit dem Sonnenrad S1 selektiv koppelbar und mit dem Antriebselement 5 fest verbunden.

Das Sonnenrad S2 ist über eine zweite Kupplung C2 mit dem Hohlrad R3 und dem Hohlrad R3 selektiv koppelbar. Das Hohlrad R1 ist über eine dritte Kupplung C3 mit dem gemeinsamen Sonnenrad S2b, S3 und über eine vierte Kupplung C4 mit dem Hohlrad R2b selektiv koppelbar. Die Planetenträgeranordnung P2b ist mit dem Hohlrad R2 und mit dem Hohlrad R3 fest verbunden, und die Planetenträgeranordnung P2 ist mit dem Abtriebselement 35 fest verbunden. Das Sonnenrad S1, das Hohlrad R2 oder das Sonnenrad S2, das gemeinsame Sonnenrad S2b, S3 und die Planetenträgeranordnung P3 sind über ein erstes, zweites, drittes bzw. viertes Bremsband B1, B2, B3, B4 (oder wahlweise über Kupplungssysteme) bremsbar. Das Hohlrad R1 ist über eine Einwegkupplung OWC1 an die Planetenträgeranordnung P1 gekuppelt, und die Planetenträgeranordnung P3 ist an eine Einwegkupplung OWC3 gekuppelt.

Das Sonnenrad S2 ist in einer anderen Anwendung über eine zweite Kupplung C2 mit dem Hohlrad R3 selektiv koppelbar.

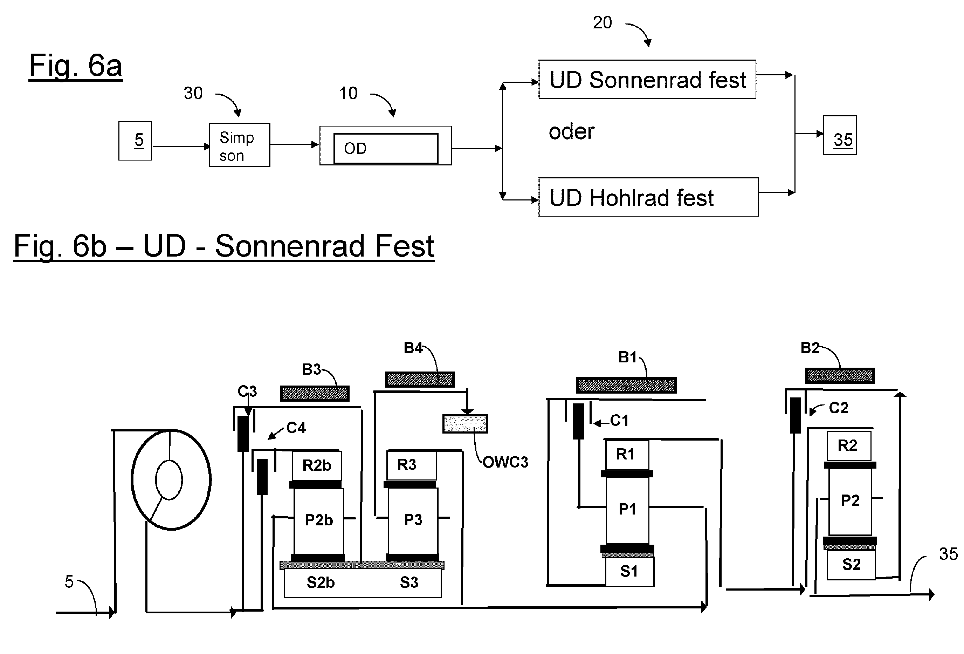

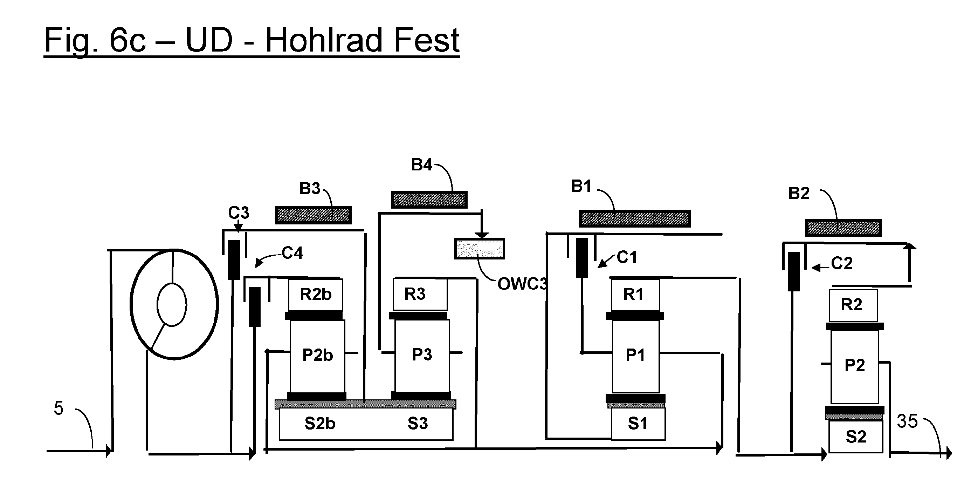

Im Weiteren wird die Konfiguration gemäß Fig. 6b,c genauer beschrieben. Gemäß Fig. 6b,c ist die Planetenträgeranordnung P1 über eine erste Kupplung C1 mit dem Sonnenrad S1 selektiv koppelbar und mit der Planetenträgeranordnung P2b und dem Hohlrad R3 fest verbunden. Das Hohlrad R1 ist über eine zweite Kupplung C2 mit dem Sonnenrad S2 selektiv koppelbar und mit dem Hohlrad R2 fest verbunden. Die Planetenträgeranordnung P2 ist mit dem Abtriebselement 35 fest verbunden. Das Antriebselement 5 ist mit dem gemeinsamen Sonnenrad S2b, S3 über eine dritte Kupplung C3 und mit dem Hohlrad R2b über eine vierte Kupplung C4 selektiv koppelbar. Das Sonnenrad S1, das Hohlrad R2 oder das Sonnenrad S2, das gemeinsame Sonnenrad S2b, S3 und die Planetenträgeranordnung P3 sind über ein erstes, zweites, drittes bzw. viertes Bremsband B1, B2, B3, B4 (oder wahlweise über Kupplungssysteme) bremsbar. Die Planetenträgeranordnung P3 ist an eine Einwegkupplung OWC3 gekuppelt.

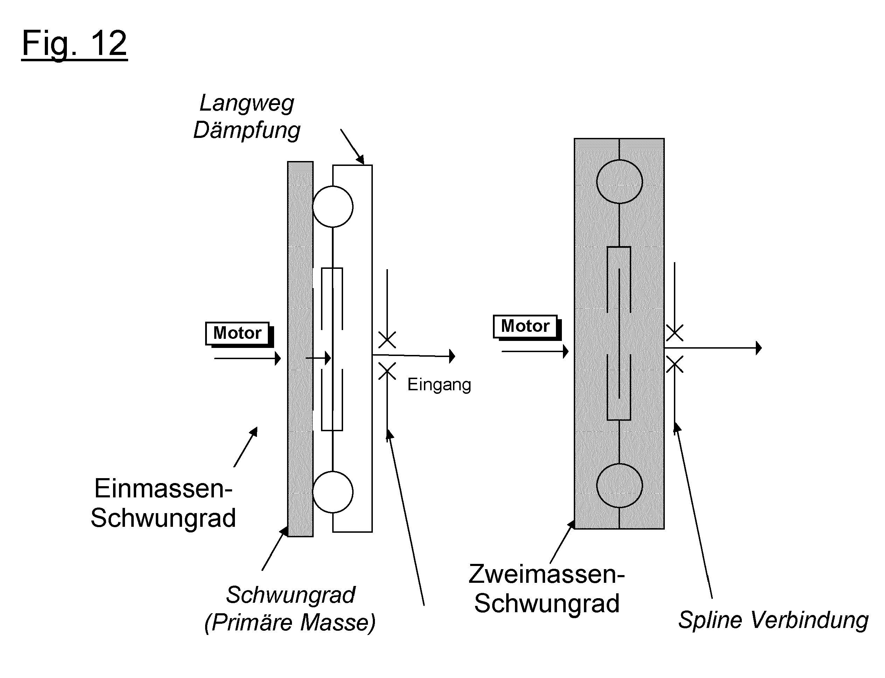

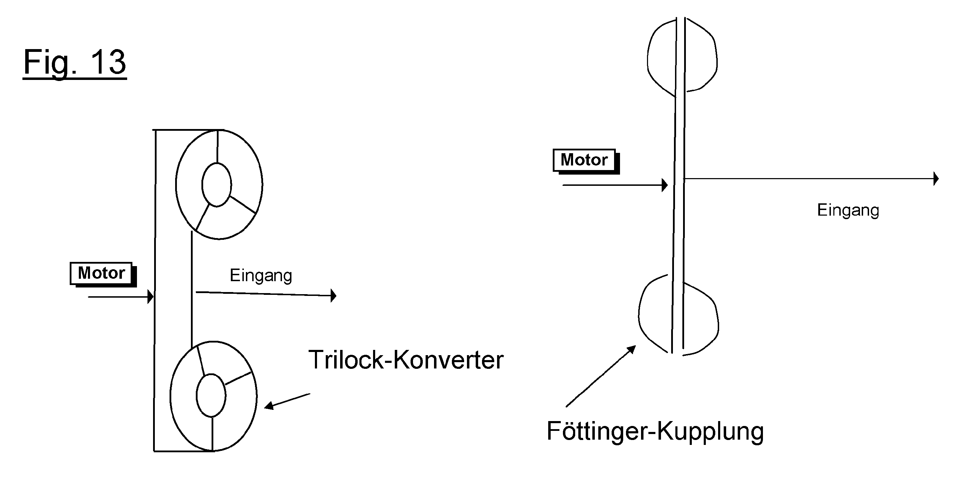

Das Hohlrad R1 ist in einer weiteren Ausführung über eine zweite Kupplung C2 mit dem Hohlrad R2 selektiv koppelbar und mit dem Sonnenrad fest verbunden. Sämtliche Ausführungsformen von Fig. 1-6 können mit allen Anfahrsystemen kombiniert werden, was in Abhängigkeit von der erzielten Gesamtspreizung erfolgt. Diese Anfahrsysteme können, wie in Figur 13 gezeigt, ein Drehmomentwandler in Kombination mit einer geringeren oder mittleren Getriebespreizung sein oder eine Föttingerkupplung mit einer hohen Getriebespreizung.
In einer anderen Anwendung können auch bei Anwendungen mit hoher Getriebespreizung auf einen Drehmomentwandler verzichtet werden und optional, wie in Figur 12 gezeigt, ein Einmassen- oder Zweimassenschwungrad eingesetzt werden. In diesem Fall können wahlweise Kupplung C1 oder Kupplung C2 mit den Anwendungen jeweils ohne Einwegkupplungen, als Anfahrkupplungen verwendet werden. Die Kupplung C4 kann in allen Getriebeausführungen ausnahmslos als Anfahrkupplung genutzt werden.

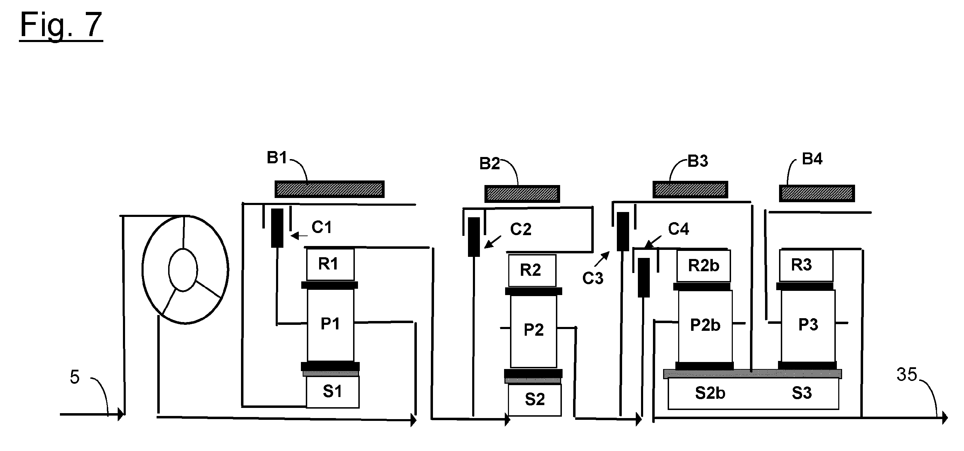

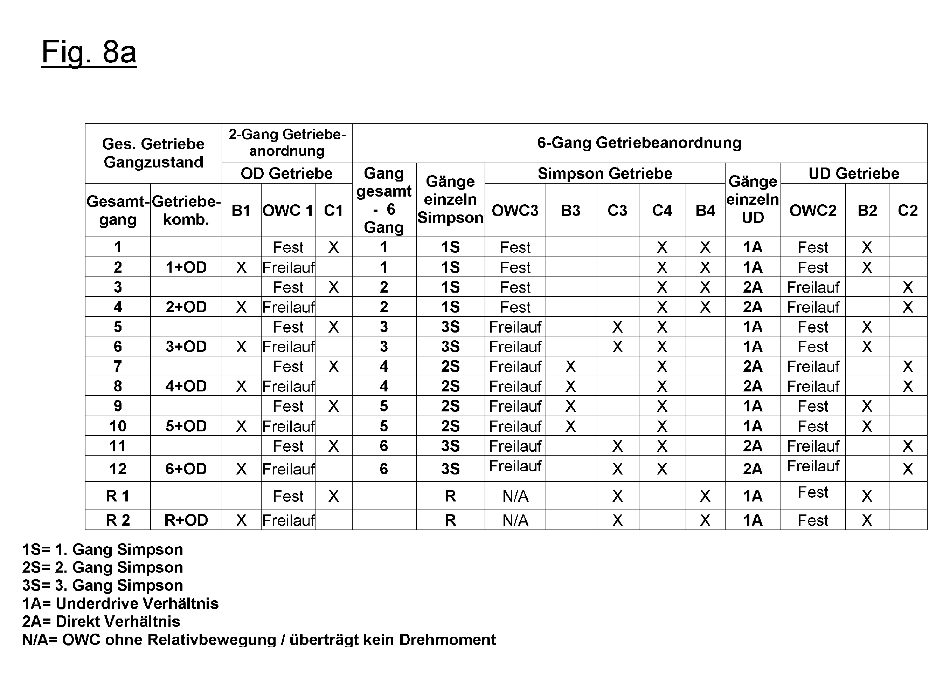

Die Figuren 8a-b zeigen Wahrheitstabellen für das Mehrganggetriebe mit (vgl. Fig. 1a-c und Fig. 4a-c) bzw. ohne (Fig. 7) Einwegkupplungen, aus denen ersichtlich ist, welche der Drehmomentübertragungseinrichtungen (d.h. der vier Bremsbänder B1-B4, der vier Kupplungen C1-C4 und der drei Einwegkupplungen OWC1-OWC3) für einen jeweils einzulegenden Gang der insgesamt 12 theoretisch einstellbaren Gänge ein- bzw. ausgerückt sind; Die Wahrheitstabellen von Fig. 8a-b sind auf die Ausgestaltungen von Fig. 1a-c und Fig. 4a-c anwendbar.

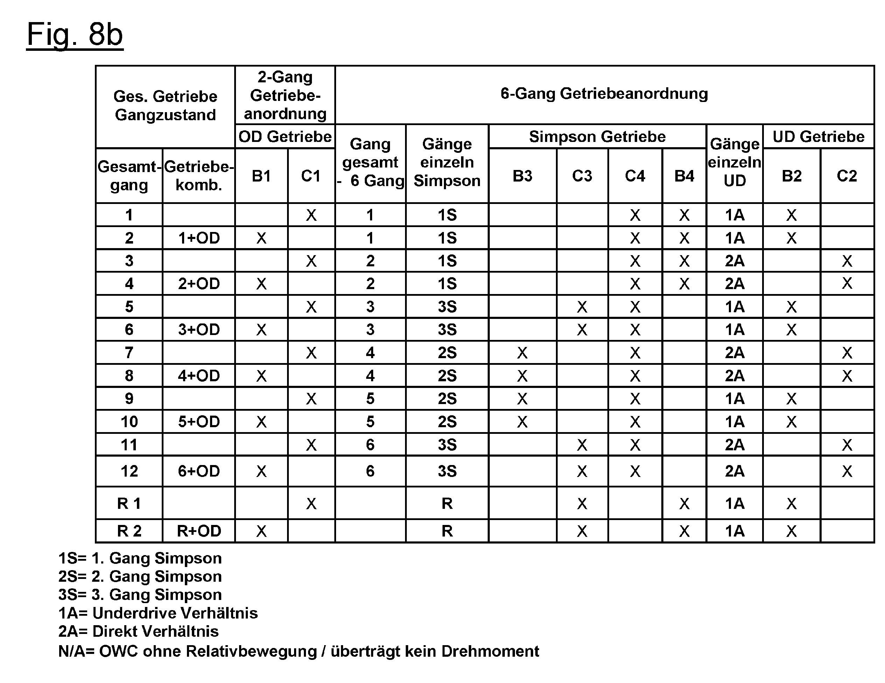

Dabei entspricht Fig. 8b einer Konfiguration, in welcher die drei Einwegkupplungen OWC1-OWC3 eliminiert sind und die Kupplungen C1 und C2 'Drive' Kupplungen sind. Diese Konfiguration ist in Fig. 7 gezeigt und auf alle in Fig. 1-6 gezeigten Versionen anwendbar.

Diese Wertetabellen zeigen in einem Block den Simpson-Planetenradsatz 30 und die zugehörigen Kupplungen, um insgesamt drei Gänge schalten zu können (1S - 3S mit Applikation von B3, C3, C4 und B4). Des Weiteren wird im Simpson-Planetenradsatz 30 der Rückwärtsgang erzielt durch Applikation von Bremsband B4 und Kupplung C3. Ein anderer Block zeigt den Underdrive-Planetengetriebe 20 mit insgesamt 2 Gangstufen 1A und 2A. In einem weiteren Block ist das Overdrive-Planetengetriebe 10 mit zwei Gangstufen +OD oder - OD mit Applikation von B1 dargestellt. Insgesamt werden durch Variation der einzelnen Gangstufen des Overdrive-Planetengetriebes 10, des Underdrive-Planetengetriebes 20 und des Simpson-Planetenradsatzes 30 ,12 Gangstufen mit 2 Rückwärtsgängen erzielt.

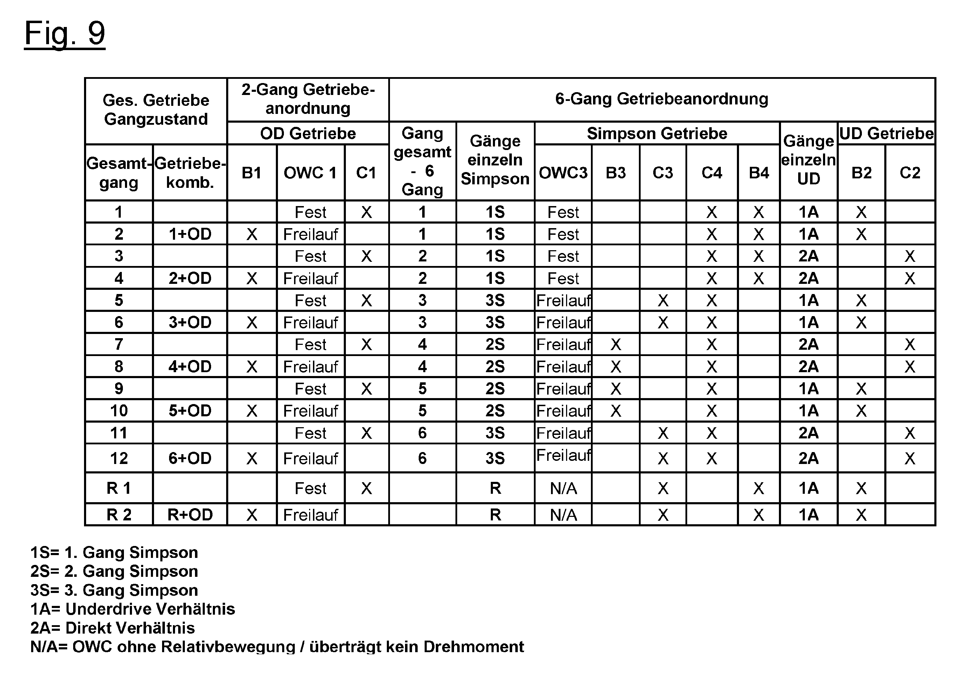

Fig. 9 zeigt eine Wahrheitstabelle, welche auf ein Mehrganggetriebe gemäß den Ausgestaltungen von Fig. 5a-c anwendbar ist. Hierbei ist das Underdrive-Planetengetriebe 20 immer hinter dem Simpson-Planetensatz 30 geschaltet und erfordert eine direkte Gangübersetzung im Underdrive-Planetengetriebe 20 in den beiden Rückwärtsgängen.

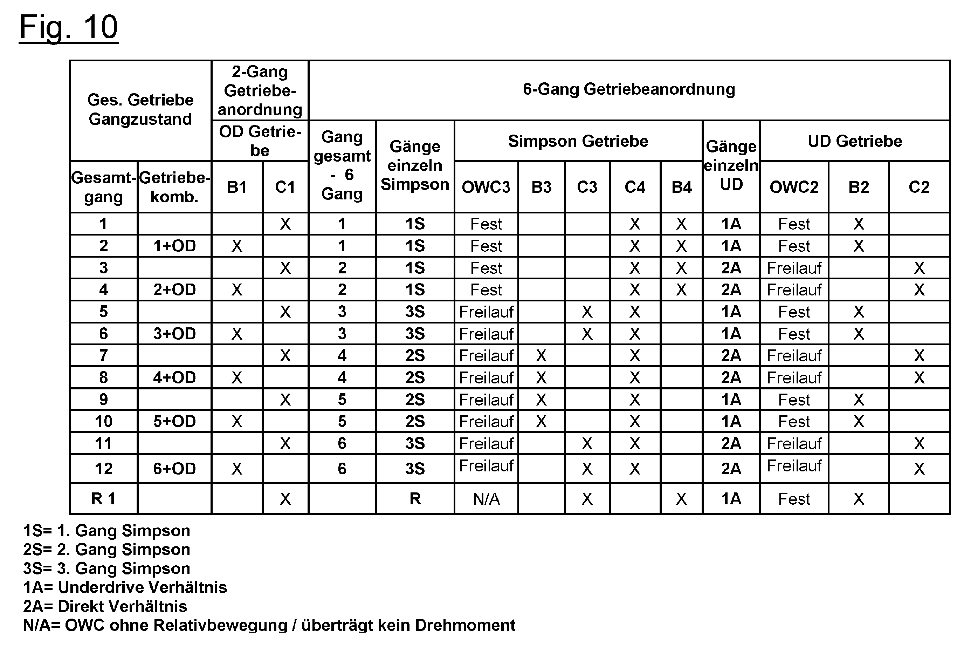

Fig. 10 zeigt eine Wahrheitstabelle, welche auf ein Mehrganggetriebe gemäß den Ausgestaltungen von Fig. 3a-c anwendbar ist. Hierbei ist das Overdrive-Planetengetriebe 10 immer hinter dem Simpson Planetensatz geschaltet und erfordert eine direkte Gangübersetzung im Overdrive-Planetengetriebe 10 und somit nur einen Rückwärtsgang, welcher durch den Simpson Planetensatz in Reihe mit dem Underdrive-Planetengetriebe 20 erzielt wird.

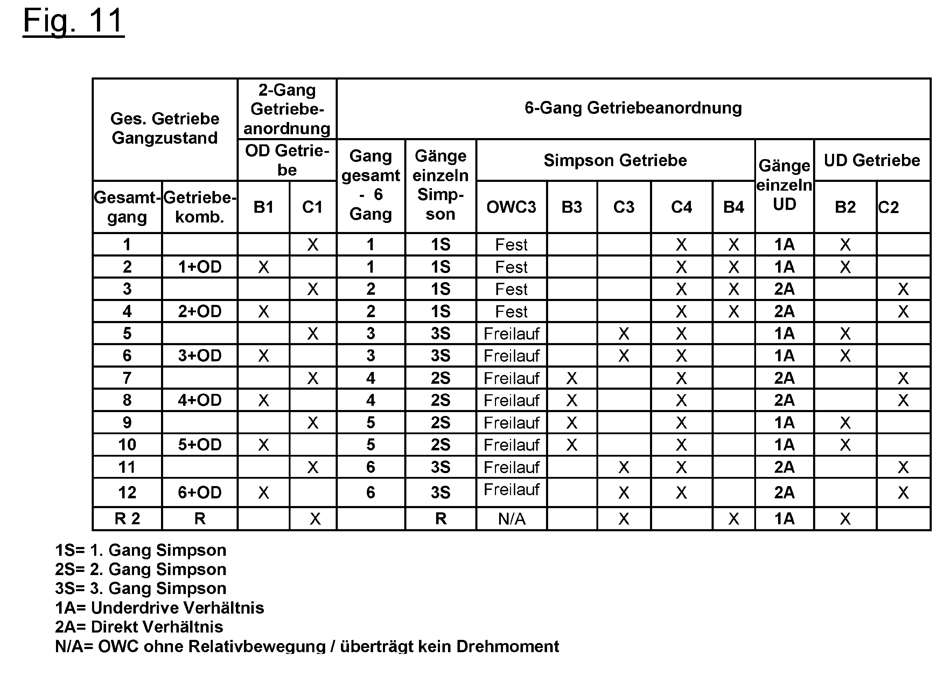

Fig. 11 zeigt eine Wahrheitstabelle, welche auf ein Mehrganggetriebe gemäß den Ausgestaltungen von Figur 2a-c and Figur 6a-c anwendbar ist. Hierbei sind das Overdrive-Planetengetriebe 10 und das Underdrive-Planetengetriebe 20 immer hinter dem Simpson-Planetensatz 30 geschaltet und erfordern eine direkte Gangübersetzung im Overdrive- und Underdrive-Planetengetriebe im Rückwärtsgang und somit wird nur einen Rückwärtsgang, welcher durch das Simpson-Planetengetriebe 30 erzielt wird.

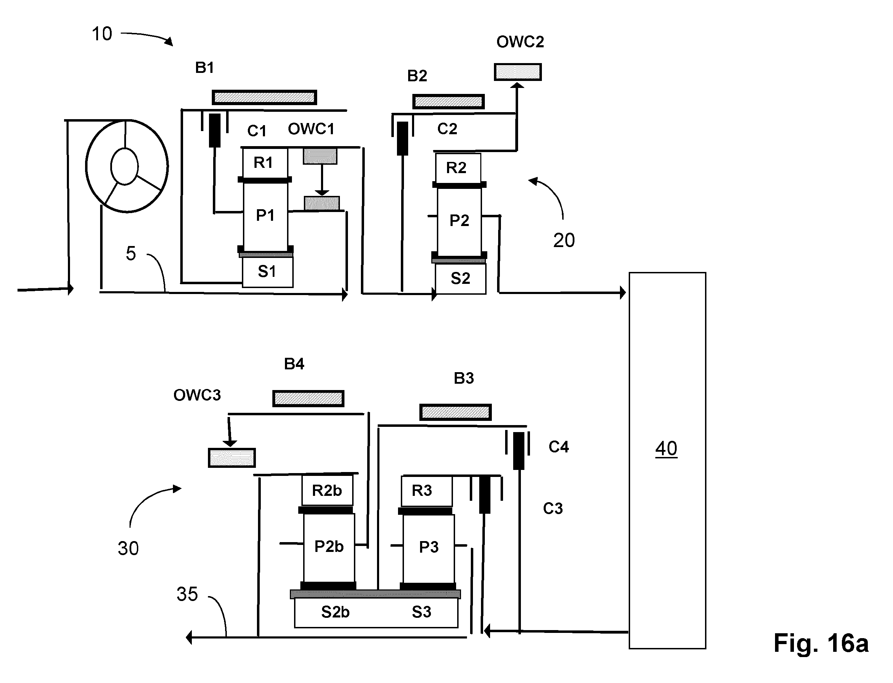

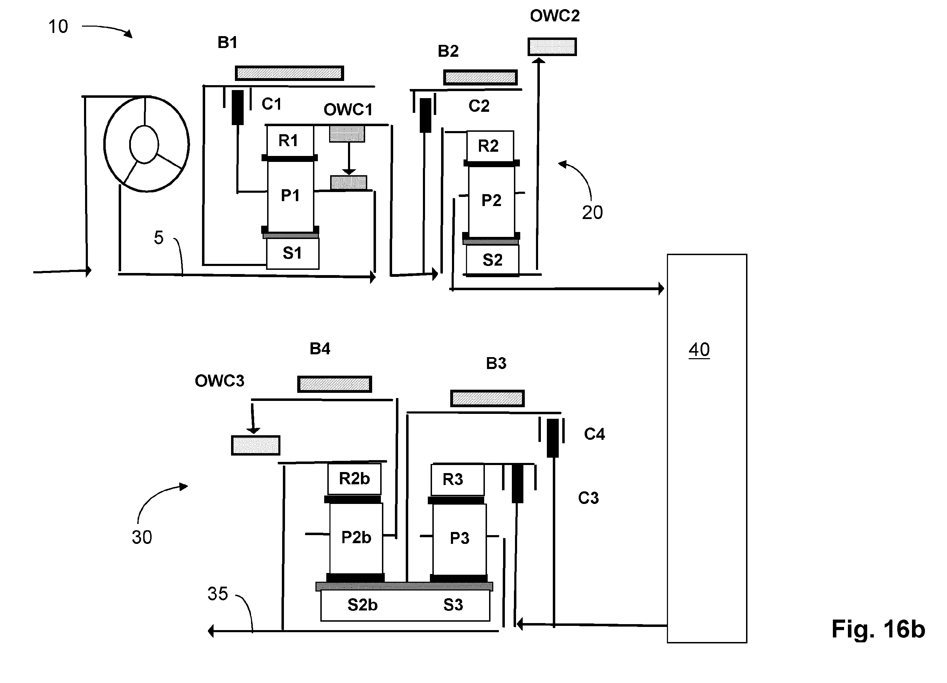

Fig. 16a-b zeigen schematisch den Aufbau eines erfindungsgemäßen Mehrganggetriebes in einer weiteren Ausführungsform. Dieses weist zwei Getriebeachsen auf, wobei auf einer dieser Getriebeachsen ein Overdrive-Planetengetriebe 10 in Reihe mit einem Underdrive-Planetengetriebe 20 geschaltet ist, wobei diese Anordnung über ein Transfer-Getriebe 40 in Reihe mit einem Simpson-Planetenradsatz 30 auf einer zweiten Getriebeachse geschaltet ist (wobei Fig. 16b eine Ausgestaltung mit festgehaltenem Sonnenrad und Fig. 16a eine Ausgestaltung mit festgehaltenem Hohlrad zeigt).

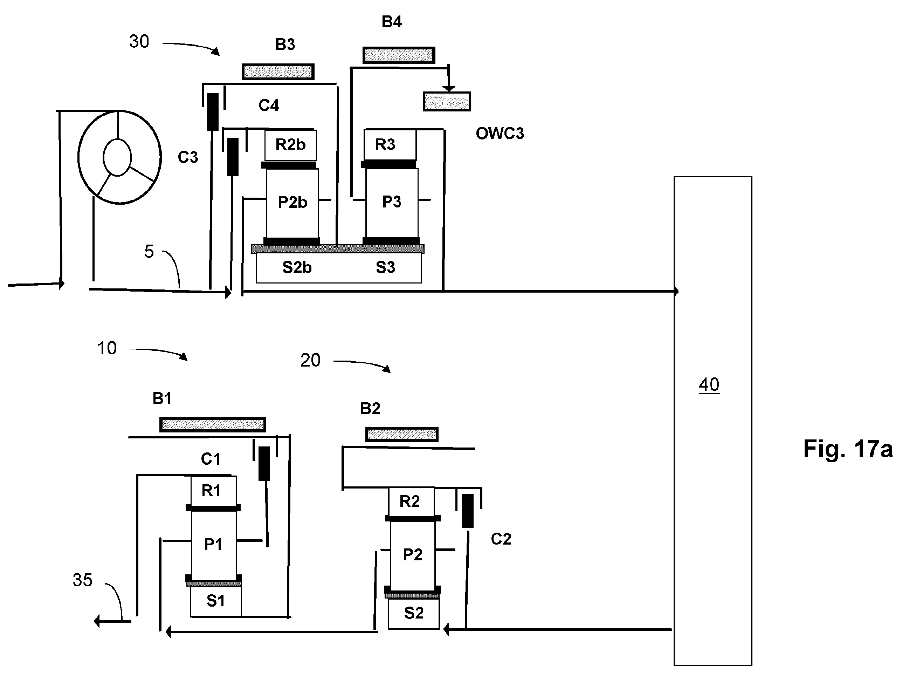

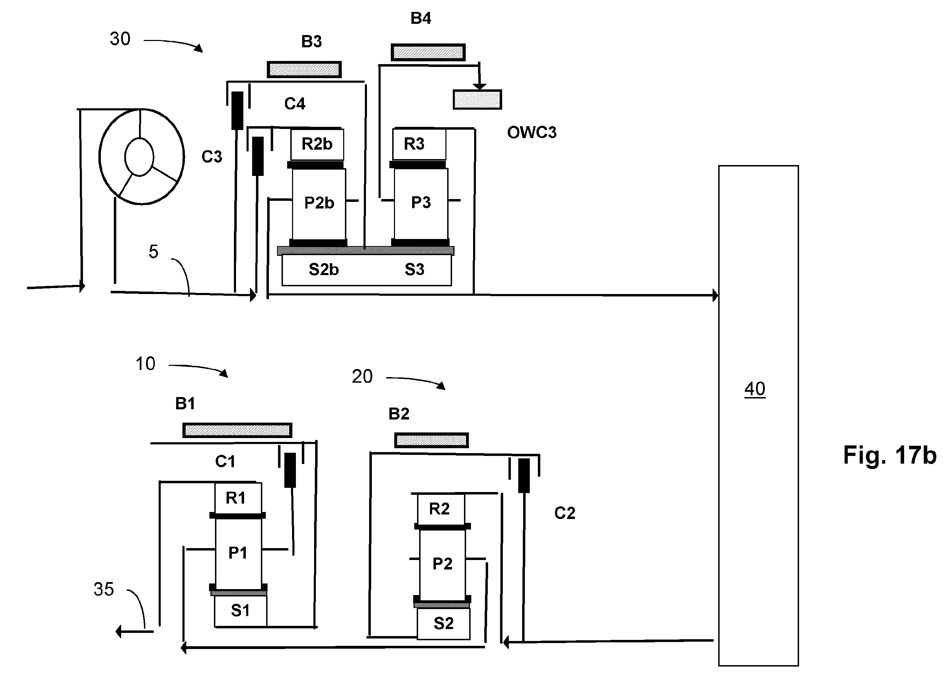

Fig. 17a-b zeigt schematisch den Aufbau eines erfindungsgemäßen Mehrganggetriebes in einer weiteren Ausführungsform. Dieses weist ebenfalls zwei Getriebeachsen auf, wobei auf einer dieser Getriebeachsen ein Simpson-Planetenradsatz 30 angeordnet ist, welcher über ein Transfer-Getriebe 40 in Reihe mit einer auf einer zweiten Getriebeachse befindlichen Anordnung aus einem Overdrive-Planetengetriebe 10 und einem Underdrive-Planetengetriebe 20 geschaltet ist (wobei Fig. 17b eine Ausgestaltung mit festgehaltenem Sonnenrad und Fig. 17a eine Ausgestaltung mit festgehaltenem Hohlrad zeigt).

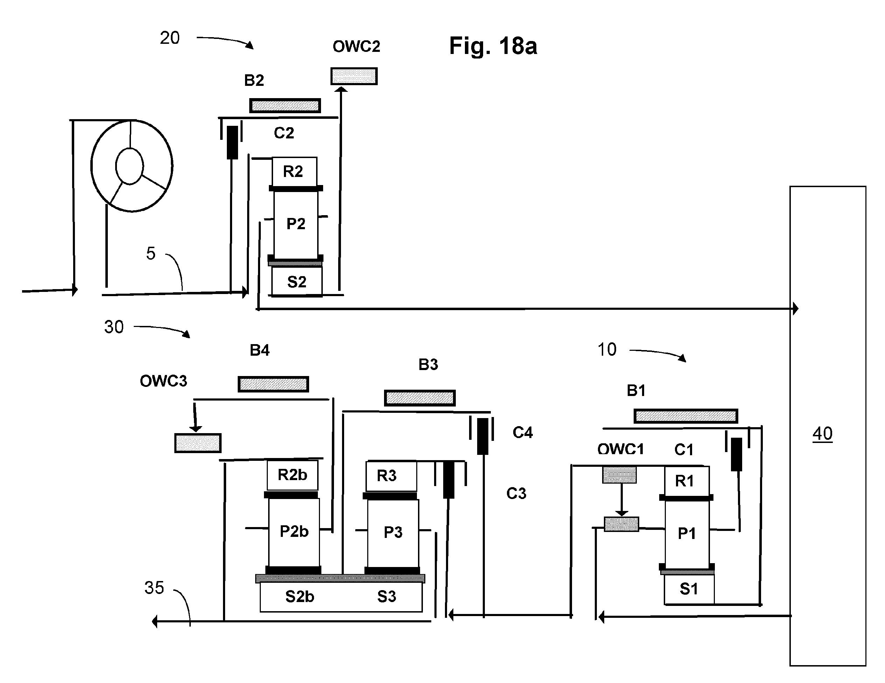

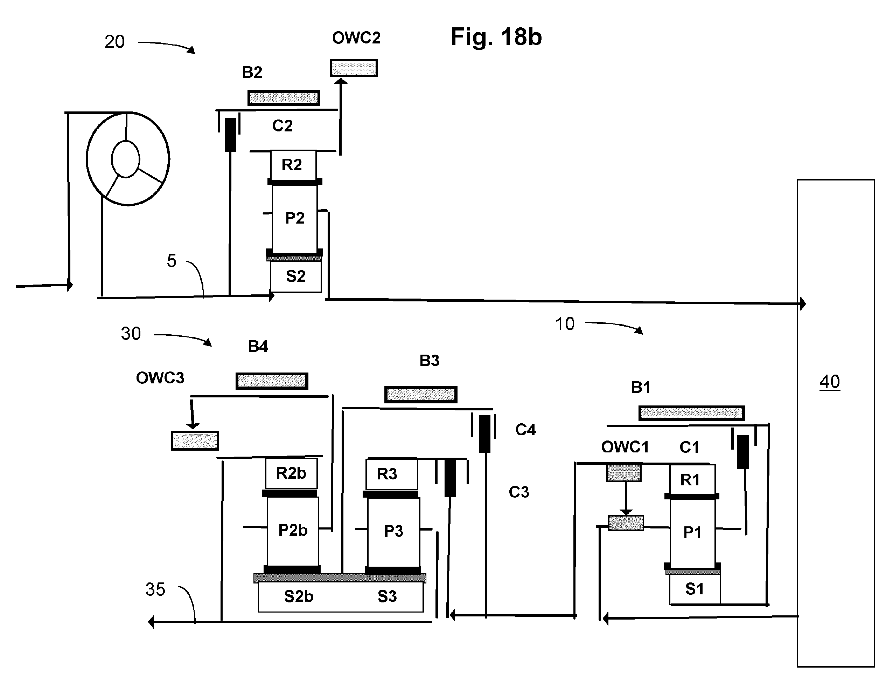

Fig. 18a-b zeigt schematisch den Aufbau eines erfindungsgemäßen Mehrganggetriebes in einer weiteren Ausführungsform. Dieses weist ebenfalls zwei Getriebeachsen auf, wobei auf einer dieser Getriebeachsen ein Underdrive-Planetengetriebe 20 angeordnet ist, welches über ein Transfer-Getriebe 40 in Reihe mit einer auf einer zweiten Getriebeachse befindlichen Anordnung aus einem Overdrive-Planetengetriebe 10 und einem Simpson-Planetenradsatz 30 geschaltet ist (wobei Fig. 18a eine Ausgestaltung mit festgehaltenem Sonnenrad und Fig. 18b eine Ausgestaltung mit festgehaltenem Hohlrad zeigt).

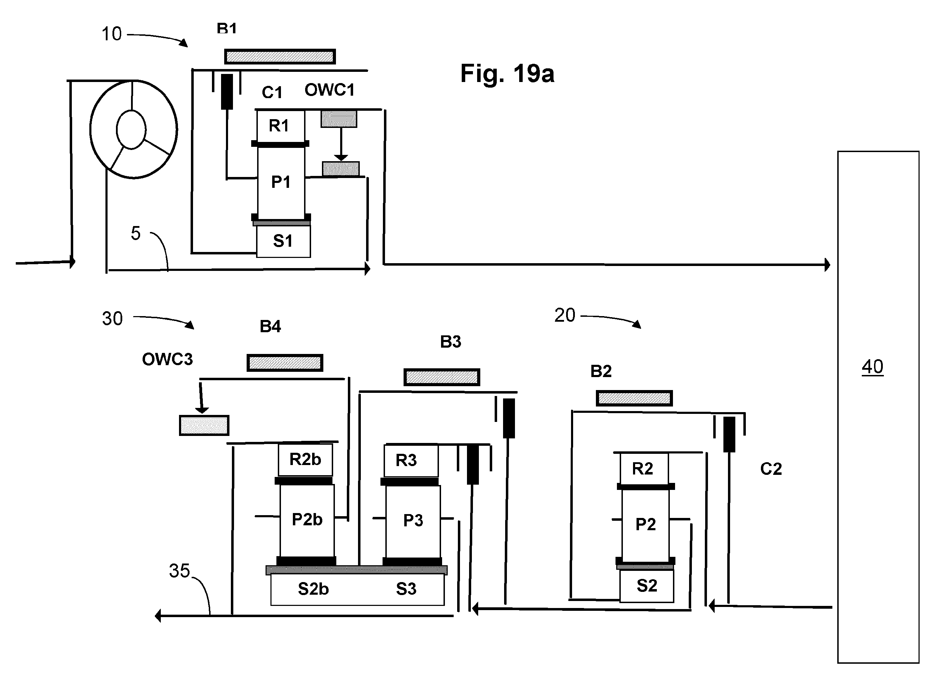

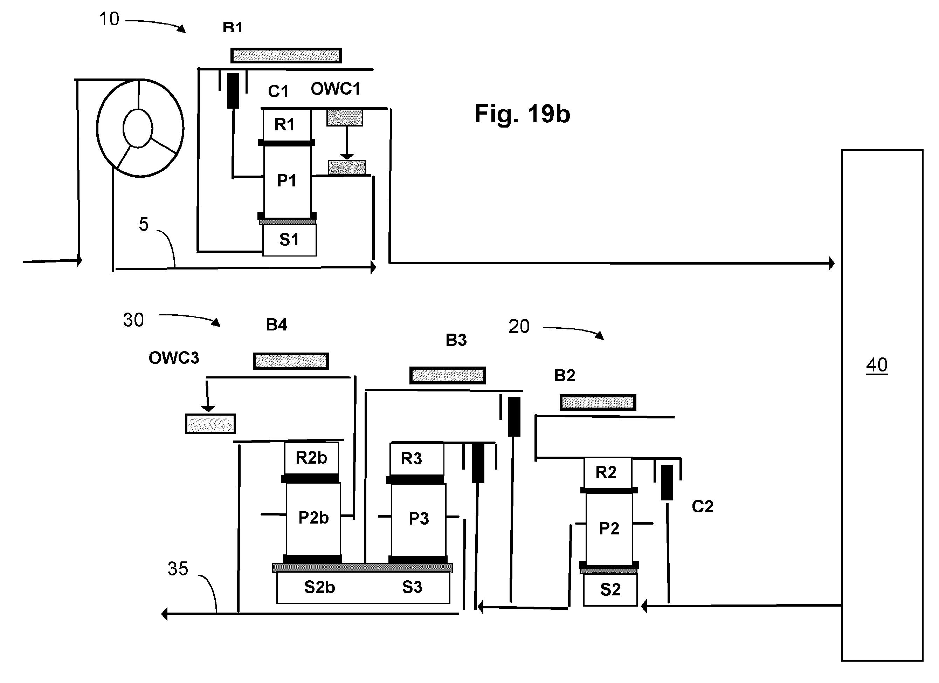

Fig. 19a-b zeigt schematisch den Aufbau eines erfindungsgemäßen Mehrganggetriebes in einer weiteren Ausführungsform. Dieses weist ebenfalls zwei Getriebeachsen auf, wobei auf einer dieser Getriebeachsen ein Overdrive-Planetengetriebe 10 angeordnet ist, welches über ein Transfer-Getriebe 40 in Reihe mit einer auf einer zweiten Getriebeachse befindlichen Anordnung aus einem Underdrive-Planetengetriebe 20 und einem Simpson-Planetenradsatz 30 geschaltet ist (wobei Fig. 19a eine Ausgestaltung mit festgehaltenem Sonnenrad und Fig. 19b eine Ausgestaltung mit festgehaltenem Hohlrad zeigt).

## Patentansprüche

1. Mehrgang-Getriebe, mit:
einem Antriebselement (5);
einem Abtriebselement (35);
einem Simpson-Planetenradsatz (30), welcher ein gemeinsames Sonnenrad (S2b, S3), zwei Hohlräder (R2b, R3) und zwei Planetenträgeranordnungen (P2b, P3) aufweist;
einem Overdrive-Planetengetriebe (10), welches ein Sonnenrad (S1), eine Planetenträgeranordnung (P1) und ein Hohlrad (R1) aufweist, und mit dem Simpson-Planetenradsatz (30) in Reihe geschaltet ist;
**dadurch gekennzeichnet, dass**
dieses ferner ein Underdrive-Planetengetriebe (20) aufweist, welches ein Sonnenrad (S2), eine Planetenträgeranordnung (P2) und ein Hohlrad (R2) aufweist und mit dem Simpson-Planetenradsatz (30) und dem Overdrive-Planetengetriebe (10) in Reihe geschaltet ist.

2. Mehrgang-Getriebe nach Anspruch 1,
**dadurch gekennzeichnet, dass**
in dem Underdrive-Planetengetriebe (20) wahlweise das Sonnenrad (S2) oder das Hohlrad (R2) festhaltbar ist.

3. Mehrgang-Getriebe nach Anspruch 1 oder 2,
**dadurch gekennzeichnet, dass**
das Overdrive-Planetengetriebe (10) bezogen auf den von dem Antriebselement (5) zum Abtriebselement (35) verlaufenden Getriebepfad vor dem Simpson-Planetenradsatz (30) angeordnet ist.

4. Mehrgang-Getriebe nach einem der Ansprüche 1 bis 3,
**dadurch gekennzeichnet, dass**
der Simpson-Planetenradsatz (30) bezogen auf den von dem Antriebselement (5) zum Abtriebselement (35) verlaufenden Getriebepfad nach dem Underdrive-Planetengetriebe (20) angeordnet ist.

5. Mehrgang-Getriebe nach einem der Ansprüche 1 bis 3,
**dadurch gekennzeichnet, dass**
der Simpson-Planetenradsatz (30) bezogen auf den von dem Antriebselement (5) zum Abtriebselement (35) verlaufenden Getriebepfad vor dem Underdrive-Planetengetriebe (20) angeordnet ist.

6. Mehrgang-Getriebe nach einem der Ansprüche 1 bis 3,
**dadurch gekennzeichnet, dass**
der Simpson-Planetenradsatz (30) bezogen auf den von dem Antriebselement (5) zum Abtriebselement (35) verlaufenden Getriebepfad vor dem Overdrive-Planetengetriebe (10) angeordnet ist.

7. Mehrgang-Getriebe nach einem der Ansprüche 1 bis 6,
**dadurch gekennzeichnet, dass**
die Planetenträgeranordnung (P1) mit dem Antriebselement (5) fest verbunden und über eine erste Kupplung (C1) mit dem Sonnenrad (S1) selektiv koppelbar ist;
das Hohlrad (R1) mit dem Sonnenrad (S2) fest verbunden und über eine zweite Kupplung (C2) mit dem Hohlrad (R2) selektiv koppelbar ist;
die Planetenträgeranordnung (P2) über eine dritte Kupplung (C3) mit dem gemeinsamen Sonnenrad (S2b, S3) selektiv koppelbar und über eine vierte Kupplung (C4) mit dem Hohlrad (R2b) selektiv koppelbar ist;
die Planetenträgeranordnung (P2b) mit dem Abtriebselement (35) und mit dem Hohlrad (R3) fest verbunden ist;
wobei das Sonnenrad (S1), das Hohlrad (R2), das gemeinsame Sonnenrad (S2b, S3) und die Planetenträgeranordnung (P3) über ein erstes, zweites, drittes bzw. viertes Bremsband (B1, B2, B3, B4) oder wahlweise mit Kupplungen bremsbar sind.

8. Mehrgang-Getriebe nach einem der Ansprüche 1 bis 6,
**dadurch gekennzeichnet, dass**
das Hohlrad (R1) mit dem Abtriebselement (35) fest verbunden ist;
die Planetenträgeranordnung (P1) über eine erste Kupplung (C1) mit dem Sonnenrad (S1) selektiv koppelbar und mit der Planetenträgeranordnung (P2) fest verbunden ist;
das Sonnenrad (S2) mit dem Hohlrad (R3) und der Planetenträgeranordnung (P2b) fest verbunden und über eine zweite Kupplung (C2) mit dem Hohlrad (R2) selektiv koppelbar ist;
und das Antriebselement (5) mit dem gemeinsamen Sonnenrad (S2b, S3) über eine dritte Kupplung (C3) und mit dem Hohlrad (R2b) über eine vierte Kupplung (C4) selektiv koppelbar ist;
wobei das Sonnenrad (S1), das Hohlrad (R2) oder das Sonnenrad (S2), das gemeinsame Sonnenrad (S2b, S3) und die Planetenträgeranordnung (P3) über ein erstes, zweites, drittes bzw. viertes Bremsband (B1, B2, B3, B4) oder wahlweise mit Kupplungen bremsbar sind.

9. Mehrgang-Getriebe nach einem der Ansprüche 1 bis 6,
**dadurch gekennzeichnet, dass**
das Hohlrad (R1) mit dem Abtriebselement (35) fest verbunden ist;
die Planetenträgeranordnung (P1) über eine erste Kupplung (C1) mit dem Sonnenrad (S1) selektiv koppelbar und mit der Planetenträgeranordnung (P2b) und dem Hohlrad (R3) fest verbunden ist;
das Hohlrad (R2) mit dem Antriebselement (5) fest verbunden und über eine zweite Kupplung (C2) mit dem Sonnenrad (S2) selektiv koppelbar ist; das gemeinsame Sonnenrad (S2b, S3) über eine dritte Kupplung (C3) mit der Planetenträgeranordnung (P2) selektiv koppelbar ist;
das Hohlrad (R2b) über eine vierte Kupplung (C4) mit der Planetenträgeranordnung (P2) selektiv koppelbar ist;
wobei das Sonnenrad (S1), das Hohlrad (R2) oder das Sonnenrad (S2), das gemeinsame Sonnenrad (S2b, S3) und die Planetenträgeranordnung (P3) über ein erstes, zweites, drittes bzw. viertes Bremsband (B1, B2, B3, B4) oder wahlweise mit Kupplungen bremsbar sind.

10. Mehrgang-Getriebe nach einem der Ansprüche 1 bis 6,
**dadurch gekennzeichnet, dass**
die Planetenträgeranordnung (P1) über eine erste Kupplung (C1) mit dem Sonnenrad (S1) selektiv koppelbar und mit der Planetenträgeranordnung (P2) fest verbunden ist;
das Sonnenrad (S2) mit dem Antriebselement (5) fest verbunden und über eine zweite Kupplung (C2) mit dem Hohlrad (R2) selektiv koppelbar ist; das Hohlrad (R1) über eine dritte Kupplung (C3) mit dem gemeinsamen Sonnenrad (S2b, S3) und über eine vierte Kupplung (C4) mit dem Hohlrad (R2b) selektiv koppelbar ist; und
die Planetenträgeranordnung (P2b) mit dem Hohlrad (R3) und mit dem Abtriebselement (35) fest verbunden ist;
wobei das Sonnenrad (S1), das Hohlrad (R2) oder das Sonnenrad (S2), das gemeinsame Sonnenrad (S2b, S3) und die Planetenträgeranordnung (P3) über ein erstes, zweites, drittes bzw. viertes Bremsband (B1, B2, B3, B4) oder wahlweise mit Kupplungen bremsbar sind.

11. Mehrgang-Getriebe nach einem der Ansprüche 1 bis 6,
**dadurch gekennzeichnet, dass**
die Planetenträgeranordnung (P1) über eine erste Kupplung (C1) mit dem Sonnenrad (S1) selektiv koppelbar und mit dem Antriebselement (5) fest verbunden ist;
das Sonnenrad (S2) über eine zweite Kupplung (C2) mit dem Hohlrad (R3) und Hohlrad (R2) selektiv koppelbar ist;
das Hohlrad (R1) über eine dritte Kupplung (C3) mit dem gemeinsamen Sonnenrad (S2b, S3) und über eine vierte Kupplung (C4) mit dem Hohlrad (R2b) selektiv koppelbar ist;
die Planetenträgeranordnung (P2b) mit dem Hohlrad (R2) und mit dem Hohlrad (R3) fest verbunden ist; und
die Planetenträgeranordnung (P2) mit dem Abtriebselement (35) fest verbunden ist;
wobei das Sonnenrad (S1), das Hohlrad (R2) oder das Sonnenrad (S2), das gemeinsame Sonnenrad (S2b, S3) und die Planetenträgeranordnung (P3) über ein erstes, zweites, drittes bzw. viertes Bremsband (B1, B2, B3, B4) oder wahlweise mit Kupplungen bremsbar sind.

12. Mehrgang-Getriebe nach einem der Ansprüche 1 bis 6,
**dadurch gekennzeichnet, dass**
die Planetenträgeranordnung (P1) über eine erste Kupplung (C1) mit dem Sonnenrad (S1) selektiv koppelbar und mit der Planetenträgeranordnung (P2b) und dem Hohlrad (R3) fest verbunden ist;
das Hohlrad (R1) über eine zweite Kupplung (C2) mit dem Sonnenrad (S2) selektiv koppelbar und mit dem Hohlrad (R2) fest verbunden ist;
die Planetenträgeranordnung (P2) mit dem Abtriebselement (35) fest verbunden ist; und
das Antriebselement (5) mit dem gemeinsamen Sonnenrad (S2b, S3) über eine dritte Kupplung (C3) und mit dem Hohlrad (R2b) über eine vierte Kupplung (C4) selektiv koppelbar ist;
wobei das Sonnenrad (S1), das Hohlrad (R2) oder das Sonnenrad (S2), das gemeinsame Sonnenrad (S2b, S3) und die Planetenträgeranordnung (P3) über ein erstes, zweites, drittes bzw. viertes Bremsband oder wahlweise mit Kupplungen (B1, B2, B3, B4) bremsbar sind.

13. Mehrgang-Getriebe nach einem der vorhergehenden Ansprüche,
**dadurch gekennzeichnet, dass**
dieses ohne Hardware-Änderung wahlweise als 6-Gang-Getriebe, 7-Gang-Getriebe, 8-Gang-Getriebe, 9-Gang-Getriebe oder 10-Gang-Getriebe betreibbar ist.

14. Mehrgang-Getriebe nach einem der vorhergehenden Ansprüche, **dadurch gekennzeichnet**, dassdieses bei entsprechend hoher Getriebespreizung ohne Drehmomenten- wandler, jedoch mit Einmassen- oder Zweimassen-Schwungrädern ausgerüstet ist.

15. Mehrgang-Getriebe nach Anspruch 14,**dadurch gekennzeichnet, dass** die erste, die zweite und die vierte Kupplung (C1, C2 und C4) wahlweise als Anfahrkupplungen verwendet werden können.

## Claims

1. Multi-gear gearbox, with:
a drive element (5);
a driven element (35);
a Simpson-type planet-wheel set (30) which has a common sun wheel (S2b, S3), two ring wheels (R2b, R3) and two planet-carrier arrangements (P2b, P3);
an overdrive planetary gear (10) which has a sun wheel (S1), a planet-carrier arrangement (P1) and a ring wheel (R1) and which is connected in series to the Simpson-type planet-wheel set (30);
**characterized in that**
the said multi-gear gearbox has, furthermore, an underdrive planetary gear (20) which has a sun wheel (S2), a planet-carrier arrangement (P2) and a ring wheel (R2) and which is connected in series to the Simpson-type planet-wheel set (30) and to the overdrive planetary gear (10).

2. Multi-gear gearbox according to Claim 1,
**characterized in that**
either the sun wheel (S2) or the ring wheel (R2) can be locked in the underdrive planetary gear (20).

3. Multi-gear gearbox according to Claim 1 or 2,
**characterized in that**
the overdrive planetary gear (10) is arranged upstream of the Simpson-type planet-wheel set (30) with respect to the transmission path running from the drive element (5) to the driven element (35).

4. Multi-gear gearbox according to one of Claims 1 to 3,
**characterized in that**
the Simpson-type planet-wheel set (30) is arranged downstream of the underdrive planetary gear (20) with respect to the transmission path running from the drive element (5) to the driven element (35).

5. Multi-gear gearbox according to one of Claims 1 to 3,
**characterized in that**
the Simpson-type planet-wheel set (30) is arranged upstream of the underdrive planetary gear (20) with respect to the transmission path running from the drive element (5) to the driven element (35).

6. Multi-gear gearbox according to one of Claims 1 to 3,
**characterized in that**
the Simpson-type planet-wheel set (30) is arranged upstream of the overdrive planetary gear (10) with respect to the transmission path running from the drive element (5) to the driven element (35).

7. Multi-gear gearbox according to one of Claims 1 to 6,
**characterized in that**
the planet-carrier arrangement (P1) is connected fixedly to the drive element (5) and is selectively couplable to the sun wheel (S1) via a first clutch (C1);
the ring wheel (R1) is connected fixedly to the sun wheel (S2) and is selectively couplable to the ring wheel (R2) via a second clutch (C2);
the planet-carrier arrangement (P2) is selectively couplable to the common sun wheel (S2b, S3) via a third clutch (C3) and is selectively couplable to the ring wheel (R2b) via a fourth clutch (C4);
the planet-carrier arrangement (P2b) is connected fixedly to the driven element (35) and to the ring wheel (R3);
the sun wheel (S1), the ring wheel (R2), the common sun wheel (S2b, S3) and the planet-carrier arrangement (P3) being brakable via a first, second, third or fourth brake band (B1, B2, B3, B4) or selectively by means of clutches.

8. Multi-gear gearbox according to one of Claims 1 to 6,
**characterized in that**
the ring wheel (R1) is connected fixedly to the driven element (35);
the planet-carrier arrangement (P1) is selectively couplable to the sun wheel (S1) via a first clutch (C1) and is connected fixedly to the planet-carrier arrangement (P2);
the sun wheel (S2) is connected fixedly to the ring wheel (R3) and to the planet-carrier arrangement (P2b) and is selectively couplable to the ring wheel (R2) via a second clutch (C2);
and the drive element (5) is selectively couplable to the common sun wheel (S2b, S3) via a third clutch (C3) and to the ring wheel (R2b) via a fourth clutch (C4); the sun wheel (S1), the ring wheel (R2) or the sun wheel (S2), the common sun wheel (S2b, S3) and the planet-carrier arrangement (P3) being brakable via a first, second, third or fourth brake band (B1, B2, B3,
B4) or selectively by means of clutches.

9. Multi-gear gearbox according to one of Claims 1 to 6,
**characterized in that**
the ring wheel (R1) is connected fixedly to the driven element (35);
the planet-carrier arrangement (P1) is selectively couplable to the sun wheel (S1) via a first clutch (C1) and is connected fixedly to the planet-carrier arrangement (P2b) and to the ring wheel (R3);
the ring wheel (R2) is connected fixedly to the drive element (5) and is selectively couplable to the sun wheel (S2) via a second clutch (C2);
the common sun wheel (S2b, S3) is selectively couplable to the planet-carrier arrangement (P2) via a third clutch (C3);
the ring wheel (R2b) is selectively couplable to the planet-carrier arrangement (P2) via a fourth clutch (C4);
the sun wheel (S1), the ring wheel (R2) or the sun wheel (S2), the common sun wheel (S2b, S3) and the planet-carrier arrangement (P3) being brakable via a first, second, third or fourth brake band (B1, B2, B3,
B4) or selectively by means of clutches.

10. Multi-gear gearbox according to one of Claims 1 to 6,
**characterized in that**
the planet-carrier arrangement (P1) is selectively couplable to the sun wheel (S1) via a first clutch (C1) and is connected fixedly to the planet-carrier arrangement (P2);
the sun wheel (S2) is connected fixedly to the drive element (5) and is selectively couplable to the ring wheel (R2) via a second clutch (C2);
the ring wheel (R1) is selectively couplable to the common sun wheel (S2b, S3) via a third clutch (C3) and to the ring wheel (R2b) via a fourth clutch (C4); and the planet-carrier arrangement (P2b) is connected fixedly to the ring wheel (R3) and to the driven element (35);
the sun wheel (S1), the ring wheel (R2) or the sun wheel (S2), the common sun wheel (S2b, S3) and the planet-carrier arrangement (P3) being brakable via a first, second, third or fourth brake band (B1, B2, B3, B4) or selectively by means of clutches.

11. Multi-gear gearbox according to one of Claims 1 to 6,
**characterized in that**
the planet-carrier arrangement (P1) is selectively couplable to the sun wheel (S1) via a first clutch (C1) and is connected fixedly to the drive element (5);
the sun wheel (S2) is selectively couplable to the ring wheel (R3) and to the ring wheel (R2) via a second clutch (C2);
the ring wheel (R1) is selectively couplable to the common sun wheel (S2b, S3) via a third clutch (C3) and to the ring wheel (R2b) via a fourth clutch (C4);
the planet-carrier arrangement (P2b) is connected fixedly to the ring wheel (R2) and to the ring wheel (R3); and
the planet-carrier arrangement (P2) is connected fixedly to the driven element (35);
the sun wheel (S1), the ring wheel (R2) or the sun wheel (S2), the common sun wheel (S2b, S3) and the planet-carrier arrangement (P3) being brakable via a first, second, third or fourth brake band (B1, B2, B3,
B4) or selectively by means of clutches.

12. Multi-gear gearbox according to one of Claims 1 to 6,
**characterized in that**
the planet-carrier arrangement (P1) is selectively couplable to the sun wheel (S1) via a first clutch (C1) and is connected fixedly to the planet-carrier arrangement (P2b) and to the ring wheel (R3);
the ring wheel (R1) is selectively couplable to the sun wheel (S2) via a second clutch (C2) and is connected fixedly to the ring wheel (R2);
the planet-carrier arrangement (P2) is connected fixedly to the driven element (35); and
the drive element (5) is selectively couplable to the common sun wheel (S2b, S3) via a third clutch (C3) and to the ring wheel (R2b) via a fourth clutch (C4);
the sun wheel (S1), the ring wheel (R2) or the sun wheel (S2), the common sun wheel (S2b, S3) and the planet-carrier arrangement (P3) being brakable via a first, second, third or fourth brake band (B1, B2, B3, B4) or selectively by means of clutches.

13. Multi-gear gearbox according to one of the preceding claims,
**characterized in that**
it can be operated selectively as a 6-gear gearbox, 7-gear gearbox, 8-gear gearbox, 9-gear gearbox or 10-gear gearbox without a change in hardware.

14. Multi-gear gearbox according to one of the preceding claims, **characterized in that**, with a correspondingly high transmission spread, it is equipped with single-mass or two-mass flywheels, but without a torque converter.

15. Multi-gear gearbox according to Claim 14, **characterized in that** the first, the second and the fourth clutch (C1, C2 and C4) can be used selectively as starting clutches.

## Revendications

1. Transmission à plusieurs rapports, comprenant :
un élément d'entraînement (5) ;
un élément de sortie (35) ;
un train planétaire Simpson (30) qui présente une roue solaire commune (S2b, S3), deux couronnes (R2b, R3) et deux agencements de porte-satellites (P2b, P3) ;
une transmission planétaire à sur-multiplication (10) qui présente une roue solaire (S1), un agencement de porte-satellites (P1) et une couronne (R1), et qui est montée en série avec le train planétaire Simpson (30) ;
**caractérisée en ce que**
celle-ci présente en outre une transmission planétaire à sous-multiplication (20) qui présente une roue solaire (S2), un agencement de porte-satellites (P2) et une couronne (R2) et qui est montée en série avec le train planétaire Simpson (30) et la transmission planétaire à sur-multiplication (10).

2. Transmission à plusieurs rapports selon la revendication 1,
**caractérisée en ce que**
la roue solaire (S2) ou la couronne (R2) peut être au choix retenue fixement dans la transmission planétaire à sous-multiplication (20).

3. Transmission à plusieurs rapports selon la revendication 1 ou 2,
**caractérisée en ce que**
la transmission planétaire à sur-multiplication (10) est disposée, par rapport à la voie de transmission s'étendant depuis l'élément d'entraînement (5) jusqu'à l'élément de sortie (35), avant le train planétaire Simpson (30).

4. Transmission à plusieurs rapports selon l'une quelconque des revendications 1 à 3,
**caractérisée en ce que**
le train planétaire Simpson (30) est disposé, par rapport à la voie de transmission s'étendant depuis l'élément d'entraînement (5) jusqu'à l'élément de sortie (35), après la transmission planétaire à sous-multiplication (20).

5. Transmission à plusieurs rapports selon l'une quelconque des revendications 1 à 3,
**caractérisée en ce que**
le train planétaire Simpson (30) est disposé, par rapport à la voie de transmission s'étendant depuis l'élément d'entraînement (5) jusqu'à l'élément de sortie (35), avant la transmission planétaire à sous-multiplication (20).

6. Transmission à plusieurs rapports selon l'une quelconque des revendications 1 à 3,
**caractérisée en ce que**
le train planétaire Simpson (30) est disposé, par rapport à la voie de transmission s'étendant depuis l'élément d'entraînement (5) jusqu'à l'élément de sortie (35), avant la transmission planétaire à sur-multiplication (10).

7. Transmission à plusieurs rapports selon l'une quelconque des revendications 1 à 6,
**caractérisée en ce que**
l'agencement de porte-satellites (P1) est connecté fixement à l'élément d'entraînement (5) et peut être accouplé de manière sélective à la roue solaire (S1) par le biais d'un premier embrayage (C1) ;
la couronne (R1) est connectée fixement à la roue solaire (S2) et peut être accouplée de manière sélective à la couronne (R2) par le biais d'un deuxième embrayage (C2) ;
l'agencement de porte-satellites (P2) peut être accouplé de manière sélective à la roue solaire commune (S2b, S3) par le biais d'un troisième embrayage (C3) et peut être accouplé de manière sélective à la couronne (R2b) par le biais d'un quatrième embrayage (C4) ;
l'agencement de porte-satellites (P2b) est connecté fixement à l'élément de sortie (35) et à la couronne (R3) ;
la roue solaire (S1), la couronne (R2), la roue solaire commune (S2b, S3) et l'agencement de porte-satellites (P3) pouvant être freinés par le biais d'une première, deuxième, troisième ou quatrième bande de frein (B1, B2, B3, B4) ou de manière sélective avec des embrayages.

8. Transmission à plusieurs rapports selon l'une quelconque des revendications 1 à 6,
**caractérisée en ce que**
la couronne (R1) est connectée fixement à l'élément de sortie (35) ;
l'agencement de porte-satellites (P1) peut être accouplé de manière sélective à la roue solaire (S1) par le biais d'un premier embrayage (C1)et est connecté fixement à l'agencement de porte-satellites (P2) ;
la roue solaire (S2) est connectée fixement à la couronne (R3) et à l'agencement de porte-satellites (P2b) et peut être accouplée de manière sélective à la couronne (R2) par le biais d'un deuxième embrayage (C2) ;
et l'élément d'entraînement (5) peut être accouplé de manière sélective à la roue solaire commune (S2b, S3) par le biais d'un troisième embrayage (C3) et à la couronne (R2b) par le biais d'un quatrième embrayage (C4) ;
la roue solaire (S1), la couronne (R2) ou la roue solaire (S2), la roue solaire commune (S2b, S3) et l'agencement de porte-satellites (P3) pouvant être freinés par le biais d'une première, deuxième, troisième ou quatrième bande de frein (B1, B2, B3, B4) ou de manière sélective avec des embrayages.

9. Transmission à plusieurs rapports selon l'une quelconque des revendications 1 à 6,
**caractérisée en ce que**
la couronne (R1) est connectée fixement à l'élément de sortie (35) ;
l'agencement de porte-satellites (P1) peut être accouplé de manière sélective à la roue solaire (S1) par le biais d'un premier embrayage (C1)et est connecté fixement à l'agencement de porte-satellites (P2b) et à la couronne (R3) ;
la couronne (R2) est connectée fixement à l'élément d'entraînement (5) et peut être accouplée de manière sélective à la roue solaire (S2) par le biais d'un deuxième embrayage (C2) ;
la roue solaire commune (S2b, S3) peut être accouplée de manière sélective à l'agencement de porte-satellites (P2) par le biais d'un troisième embrayage (C3) ;
la couronne (R2b) peut être accouplée de manière sélective à l'agencement de porte-satellites (P2) par le biais d'un quatrième embrayage (C4) ;
la roue solaire (S1), la couronne (R2) ou la roue solaire (S2), la roue solaire commune (S2b, S3) et l'agencement de porte-satellites (P3) pouvant être freinés par le biais d'une première, deuxième, troisième ou quatrième bande de frein (B1, B2, B3, B4) ou de manière sélective avec des embrayages.

10. Transmission à plusieurs rapports selon l'une quelconque des revendications 1 à 6,
**caractérisée en ce que**
l'agencement de porte-satellites (P1) peut être accouplé de manière sélective à la roue solaire (S1) par le biais d'un premier embrayage (C1)et est connecté fixement à l'agencement de porte-satellites (P2) ;
la roue solaire (S2) est connectée fixement à l'élément d'entraînement (5) et peut être accouplée de manière sélective à la couronne (R2) par le biais d'un deuxième embrayage (C2) ;
la couronne (R1) peut être accouplée de manière sélective à la roue solaire commune (S2b, S3) par le biais d'un troisième embrayage (C3) et à la couronne (R2b) par le biais d'un quatrième embrayage (C4) ; et
l'agencement de porte-satellites (P2b) est connecté fixement à la couronne (R3) et à l'élément de sortie (35) ;
la roue solaire (S1), la couronne (R2) ou la roue solaire (S2), la roue solaire commune (S2b, S3) et l'agencement de porte-satellites (P3) pouvant être freinés par le biais d'une première, deuxième, troisième ou quatrième bande de frein (B1, B2, B3, B4) ou de manière sélective avec des embrayages.

11. Transmission à plusieurs rapports selon l'une quelconque des revendications 1 à 6,
**caractérisée en ce que**
l'agencement de porte-satellites (P1) peut être accouplé de manière sélective à la roue solaire (S1) par le biais d'un premier embrayage (C1) et est connecté fixement à l'élément d'entraînement (5) ;
la roue solaire (S2) peut être accouplée de manière sélective à la couronne (R3) et à la couronne (R2) par le biais d'un deuxième embrayage (C2) ;
la couronne (R1) peut être accouplée de manière sélective à la roue solaire commune (S2b, S3) par le biais d'un troisième embrayage (C3) et à la couronne (R2b) par le biais d'un quatrième embrayage (C4) ;
l'agencement de porte-satellites (P2b) est connecté fixement à la couronne (R2) et à la couronne (R3) ; et
l'agencement de porte-satellites (P2) est connecté fixement à l'élément de sortie (35) ;
la roue solaire (S1), la couronne (R2) ou la roue solaire (S2), la roue solaire commune (S2b, S3) et l'agencement de porte-satellites (P3) pouvant être freinés par le biais d'une première, deuxième, troisième ou quatrième bande de frein (B1, B2, B3, B4) ou de manière sélective avec des embrayages.

12. Transmission à plusieurs rapports selon l'une quelconque des revendications 1 à 6,
**caractérisée en ce que**
l'agencement de porte-satellites (P1) peut être accouplé de manière sélective à la roue solaire (S1) par le biais d'un premier embrayage (C1)et est connecté fixement à l'agencement de porte-satellites (P2b) et à la couronne (R3) ;
la couronne (R1) peut être accouplée de manière sélective à la roue solaire (S2) par le biais d'un deuxième embrayage (C2) et est connectée fixement à la couronne (R2) ;
l'agencement de porte-satellites (P2) est connecté fixement à l'élément de sortie (35) ; et
l'élément d'entraînement (5) peut être accouplé de manière sélective à la roue solaire commune (S2b, S3) par le biais d'un troisième embrayage (C3) et à la couronne (R2b) par le biais d'un quatrième embrayage (C4) ;
la roue solaire (S1), la couronne (R2) ou la roue solaire (S2), la roue solaire commune (S2b, S3) et l'agencement de porte-satellites (P3) pouvant être freinés par le biais d'une première, deuxième, troisième ou quatrième bande de frein (B1, B2, B3, B4) ou de manière sélective avec des embrayages.

13. Transmission à plusieurs rapports selon l'une quelconque des revendications précédentes,
**caractérisée en ce que**
celle-ci peut fonctionner sans modifier l'équipement, de manière sélective sous forme de transmission à 6 rapports, de transmission à 7 rapports, de transmission à 8 rapports, de transmission à 9 rapports, ou de transmission à 10 rapports.

14. Transmission à plusieurs rapports selon l'une quelconque des revendications précédentes,
**caractérisée en ce que**
celle-ci est équipée, dans le cas d'un étagement de la transmission de taille correspondante, sans convertisseur de couple, mais avec des volants d'inertie à une ou deux masses.

15. Transmission à plusieurs rapports selon la revendication 14,
**caractérisée en ce que**
le premier, le deuxième et le quatrième embrayage (C1, C2 et C4) peuvent être utilisés de manière sélective en tant qu'embrayages de démarrage.
